# EUROPÄISCHE PATENTSCHRIFT

(11) **EP 3 746 344 B1**
(45) Veröffentlichungstag und Bekanntmachung des Hinweises auf die Patenterteilung: **24.05.2023**
(21) Anmeldenummer: 19723314.1
(22) Anmeldetag: 27.03.2019
(51) Int. Cl.: B60W 50/00, B60W 30/14, B60W 30/16, B60W 10/04, B60W 10/184, B60W 10/20, B60W 30/06, B60W 30/12, B60W 30/18

(54) **STEUERUNGSSYSTEM FÜR EIN KRAFTFAHRZEUG ZUM KOORDINIEREN UND AUSFÜHREN VON KUNDENFUNKTIONEN, VERFAHREN ZUM BETREIBEN EINES DERARTIGEN STEUERUNGSSYSTEMS SOWIE KRAFTFAHRZEUG MIT EINEM DERARTIGEN STEUERUNGSSYSTEM**
CONTROL SYSTEM FOR A MOTOR VEHICLE FOR COORDINATING AND CARRYING OUT CUSTOMER FUNCTIONS, METHOD FOR OPERATING SUCH A CONTROL SYSTEM, AND MOTOR VEHICLE COMPRISING SUCH A CONTROL SYSTEM
SYSTÈME DE COMMANDE D'UN VÉHICULE AUTOMOBILE POUR COORDINER ET EXÉCUTER DES FONCTIONS CLIENT, PROCÉDÉ DE FONCTIONNEMENT D'UN TEL SYSTÈME DE COMMANDE ET VÉHICULE AUTOMOBILE ÉQUIPÉ D'UN TEL SYSTÈME DE COMMANDE

(30) Priorität: 03.05.2018 DE 102018206808
(43) Veröffentlichungstag der Anmeldung: 09.12.2020
(73) Patentinhaber: VOLKSWAGEN AKTIENGESELLSCHAFT, 38440 Wolfsburg (DE)
(72) Erfinder: BLUMENTRITT, Marc, 38104 Braunschweig (DE); CETERA, Janina, 38470 Parsau (DE)
(86) Internationale Anmeldenummer: PCT/EP2019/057760
(87) Internationale Veröffentlichungsnummer: WO 2019/211049

(56) Entgegenhaltungen:
- WO-A1-2018/029052
- DE-A1-102011 084 619

## Beschreibung

Die Erfindung betrifft ein Steuerungssystem für ein Kraftfahrzeug zum Koordinieren und Ausführen von Kundenfahrzeugfunktionen, ein Verfahren zum Betreiben eines derartigen Steuerungssystems sowie ein Kraftfahrzeug mit einem derartigen Steuerungssystem.

Üblicherweise werden Kundenfahrzeugfunktionen, wie beispielsweise Funktionen von Fahrerassistenzsystemen, dezentral in einem Kraftfahrzeug untereinander koordiniert. Dies bedeutet, dass in der Steuereinheit jeder der Kundenfahrzeugfunktion hinterlegt ist, wie sich diese zu verhalten hat, wenn bereits eine andere Kundenfahrzeugfunktion aktiv ist. Bei einer geringen Anzahl von Kundenfahrzeugfunktionen in einem Kraftfahrzeug, also zum Beispiel wenn einem Benutzer des Kraftfahrzeugs nur wenige Funktionen von Fahrerassistenzsystemen zur Verfügung stehen, ist die mit der Koordination zwischen den einzelnen Kundenfahrzeugfunktionen verbundene Komplexität noch relativ gering. Die Anzahl der Kundenfahrzeugfunktionen in Kraftfahrzeugen steigt jedoch stetig an, was die Komplexität der Koordinierung zwischen den einzelnen Kundenfahrzeugfunktionen stark ansteigen lässt. Insgesamt steigt somit der Aufwand zur Koordinierung bei einer dezentralen Umsetzung der Koordinierung immer stärker an, was insbesondere bei Kundenfahrzeugfunktionen, die sicherheitsrelevant für das Betreiben des Kraftfahrzeugs sind, zeitintensiv sein kann und somit reduziert werden sollte.

In der DE 10 2016 124 708 A1 wird ein Entscheidungssystem zur kombinierten automatischen Fahrerassistenz beschrieben, das in einem Fahrzeug für automatische Fahrerassistenz installierbar ist. Dieses Entscheidungssystem umfasst eine Fahrerassistenzeinrichtung mit automatischer Längsregelung und eine Fahrerassistenzeinrichtung mit automatischer Querregelung sowie eine Sensoreinrichtung zur Erfassung des Fahrzeugzustands und des Umgebungszustands. Basierend auf dem Fahrzeugzustand und dem Umgebungszustand kann daraufhin von dem Entscheidungssystem bestimmt werden, ob die Fahrerassistenzeinrichtung mit automatischer Längsregelung oder die Fahrerassistenzeinrichtung mit automatischer Querregelung ausgeschaltet werden muss, um die Sicherheit eines Autopiloten des Kraftfahrzeugs zu verbessern.

In der DE 10 2010 001 045 A1 wird ein Anfahrassistent für ein Kraftfahrzeug beschrieben. Dieser Anfahrassistent umfasst eine Entscheidungseinrichtung, die dazu ausgebildet ist, abhängig von einem Fahrbahngefälle und von einer Soll-Anfahrdynamik eine Anfahrstrategie auszuwählen.

In der WO 2004/085220 A1 wird ein Verfahren beschrieben, mit dem von einem Fahrer eines Kraftfahrzeugs unabhängige Eingriffe in ein Fahrzeugsystem ermittelt werden können. Dieses Verfahren basiert auf einem Gefahrenrechner, der basierend auf vorgegebenen Fahrzeugdaten, Umfelddaten, aktuellen Fahrzeug- und Fahrer- oder Personendaten eine Bewertung der Gefahrenlage des Kraftfahrzeugs und der um und außerhalb des Kraftfahrzeugs vorhandenen Personen vornimmt. Abhängig von den Ergebnissen dieses Gefahrenrechners unter Berücksichtigung bestimmter Kriterien werden hierbei Ansteuerungssignale ermittelt, mit denen Aktuatoren des Kraftfahrzeugs derart angesteuert werden, dass eine maximale Schutzwirkung für die Personen und das Kraftfahrzeug erreicht wird.

Die WO 2018/029052 A1 betrifft ein Verfahren zur Koordination von Fahrassistenzfunktionen in einem Fahrzeug, wobei, wenn eine zu aktivierende Fahrassistenzfunktion eine Aktivierungsanfrage an einen Fahrassistenzkoordinator sendet, dieser basierend auf einer vorgegebenen Übergangsmatrix umfassend Informationen zu Übergangsmöglichkeiten zwischen aktiven und zu aktivierenden Fahrassistenzfunktionen entscheidet, ob die Aktivierung der zu aktivierenden Fahrassistenzfunktion erlaubt, eine Freigabe nur für ein Anzeigen, nicht für ein Regeln, erteilt oder die Aktivierung verweigert wird.

Die DE 10 2011 084 619 A1 betrifft ein Verfahren zum Betreiben eines Fahrerassistenzsystems für ein Fahrzeug, wobei ein Betriebszustand des Fahrerassistenzsystems in Abhängigkeit von einem weiteren Betriebszustand eines weiteren Fahrerassistenzsystems für das Fahrzeug gesteuert wird. Es ist ein Datenbanksystem vorgesehen, das eine Datenbank umfasst, die eine Abhängigkeitstabelle aufweist. Hierbei umfasst die Abhängigkeitstabelle insbesondere die Information, welche Fahrerassistenzsysteme gleichzeitig aktiviert sein dürfen. Abhängig von der Abhängigkeitstabelle sowie abhängig von dem weiteren Betriebszustand kann dann vorgesehen sein, dass die Steuerung den Betriebszustand des Fahrerassistenzsystems steuert. Wenn also beispielsweise das weitere Fahrerassistenzsystem aktiviert ist und die Abhängigkeitstabelle anzeigt, dass in dem Fall, wenn das weitere Fahrerassistenzsystem aktiviert ist, das Fahrerassistenzsystem selber nicht aktiviert werden darf, so wird das Fahrerassistenzsystem deaktiviert gehalten beziehungsweise deaktiviert werden. Wenn beispielsweise die Abhängigkeitstabelle die Information bereitstellt, dass, auch wenn das weitere Fahrerassistenzsystem aktiviert ist, das Fahrerassistenzsystem gleichzeitig mit dem weiteren Fahrerassistenzsystem betrieben werden darf, so kann die Steuerung das Fahrerassistenzsystem aktivieren beziehungsweise in dem aktivierten Betriebszustand halten. Ein deaktivierter Betriebszustand kann auch bedeuten, dass sich das Fahrerassistenzsystem in einem Stand-By-Modus befindet.

Es ist die Aufgabe der Erfindung, eine Lösung bereitzustellen, mit der besonders vorteilhaft mehrere Kundenfahrzeugfunktionen eines Kraftfahrzeugs koordiniert und ausgeführt werden können.

Diese Aufgabe wird durch ein Steuerungssystem für ein Kraftfahrzeug zum Koordinieren und Ausführen von Kundenfahrzeugfunktionen sowie durch ein Verfahren zum Betreiben eines derartigen Steuerungssystems für ein Kraftfahrzeug gelöst.

Das erfindungsgemäße Steuerungssystem für ein Kraftfahrzeug zum Koordinieren und Ausführen von Kundenfahrzeugfunktionen umfasst einen zentralen Fahrzeugregler zum Ansteuern von Fahrzeugfunktionen sowie mehrere Kundenfahrzeugfunktionen, die dazu eingerichtet sind, die Fahrzeugfunktionen betreffende Aktivierungsanforderungen sowie dazugehörige Steuerbefehle für die jeweilige Kundenfunktion einer Auswerteeinheit des Fahrzeugreglers zu übermitteln. Die Auswerteeinheit des Fahrzeugreglers ist dazu eingerichtet, während eine aktuell inaktive Kundenfahrzeugfunktion eine Aktivierungsanforderung ermittelt, gemäß einer vorbestimmten Auswahlroutine zu bestimmen, welcher vorbestimmte Aktivierungszustand der aktuell inaktiven Kundenfahrzeugfunktion sowie gegebenenfalls einer bereits aktiven Kundenfahrzeugfunktion zugeordnet wird, und die zugeordneten Aktivierungszustände an die entsprechenden Kundenfahrzeugfunktionen und den Fahrzeugregler zu übermitteln. Der Fahrzeugregler ist dazu eingerichtet, unter Berücksichtigung der zugeordneten Aktivierungszustände die Fahrzeugfunktionen des Kraftfahrzeugs gemäß den jeweiligen Steuerbefehlen der entsprechenden Kundenfahrzeugfunktionen zur Durchführung der jeweiligen Kundenfunktion anzusteuern.

Erfindungsgemäß ist somit ein System zum Ansteuern eines Kraftfahrzeugs vorgesehen, mit dem Aktivierungsanfragen von Kundenfahrzeugfunktionen organisiert und durchgeführt werden können. Dieses Steuerungssystem weist einen Fahrzeugregler mit einer Auswerteeinheit des Fahrzeugreglers, mehrere Fahrzeugfunktionen, die vom Fahrzeugregler angesteuert werden, sowie mehrere Kundenfahrzeugfunktionen auf. Die Kundenfahrzeugfunktionen weisen jeweils Kundenfunktionen auf, das heißt jeder Kundenfahrzeugfunktion ist zumindest eine bestimmte Aufgabe oder Rolle im Kraftfahrzeug zugeordnet. Zur Realisierung der von einer Kundenfahrzeugfunktion angestrebten Kundenfunktion müssen die einzelnen Fahrzeugfunktionen des Kraftfahrzeugs angesteuert werden, bei denen es sich in der Regel um eine Lenkung, eine Bremse und einen Antrieb des Kraftfahrzeugs handelt.

Die Kundenfahrzeugfunktionen sind zudem dazu eingerichtet, sogenannte Aktivierungsanforderungen, die die jeweiligen zur Durchführung der entsprechenden Kundenfunktionen der Kundenfahrzeugfunktion erforderlichen Fahrzeugfunktionen betreffen, an die Auswerteeinheit des Fahrzeugreglers zu schicken. Zusätzlich zu diesen Aktivierungsanforderungen, die im einfachsten Fall lediglich die Information enthalten, dass die entsprechende Kundenfahrzeugfunktion auf die Fahrzeugfunktionen des Kraftfahrzeugs zugreifen möchte, werden entsprechende Steuerbefehle, das heißt detailliertere Informationen zur Ansteuerung der Fahrzeugfunktionen betreffend die Durchführung der entsprechenden Kundenfunktion, an die Auswerteeinheit des Fahrzeugreglers gesendet. Nachdem die Auswerteeinheit des Fahrzeugreglers von einer bisher nicht aktiven Kundenfahrzeugfunktion eine solche Aktivierungsanforderung empfangen hat, ist die Auswerteeinheit dazu ausgelegt, nach einer bestimmten Auswertevorschrift, der sogenannten Auswahlroutine, die Aktivierungsanforderung dieser Kundenfahrzeugfunktion zu bewerten. Hierbei wird jeder Kundenfahrzeugfunktion ein sogenannter Aktivierungszustand zugeordnet, der Informationen darüber enthält, inwiefern eine Kundenfahrzeugfunktion aktuell aktiviert oder deaktiviert sein sollte. Die Auswerteeinheit ist somit dazu eingerichtet zu bestimmen, ob das Kraftfahrzeug gemäß den Steuerbefehlen einer bisher nicht aktiven Kundenfahrzeugfunktion angesteuert werden soll. Ein solcher Aktivierungszustand wird zudem für eine bereits aktive Kundenfahrzeugfunktion bestimmt, falls aktuell bereits eine aktive Kundenfahrzeugfunktion im Steuerungssystem vorliegt.

Die so zugeordneten und bestimmten Aktivierungszustände werden nun zum einen an die bisher nicht aktive Kundenfahrzeugfunktion als auch gegebenenfalls an die bisher aktivierte Kundenfahrzeugfunktion sowie an den Fahrzeugregler weitergegeben. Bei der Ansteuerung des Kraftfahrzeugs durch den Fahrzeugregler wird daraufhin berücksichtigt, welche Aktivierungszustände der einzelnen Kundenfahrzeugfunktionen dem Fahrzeugregler übermittelt wurden und basierend auf diesen Informationen und nach den vorliegenden Steuerbefehlen der beteiligten Kundenfahrzeugfunktionen der Fahrzeugregler das Kraftfahrzeug ansteuern.

Befindet sich beispielsweise ein Kraftfahrzeug, das mit einer Geschwindigkeitsregelanlage, das heißt einem Tempomaten, fährt, in der Situation, dass ein automatischer Distanzregler, ein ACC (Adapted Cruise Control)-System, aktiviert wird, ist das Steuerungsverfahren dazu ausgelegt, zu koordinieren, ob die neu aktivierte Fahrerassistenzfunktion, das heißt der automatische Distanzregler, auf die Steuerung des Kraftfahrzeugs zugreifen darf oder nicht. Sowohl die Geschwindigkeitsregelanlage als auch der automatische Distanzregler stellen hierbei zwei Kundenfahrzeugfunktionen dar, die jeweils dazu eingerichtet sind, zumindest mittelbar mit ihren jeweiligen Steuerbefehlen Fahrzeugfunktionen, wie hier insbesondere die Geschwindigkeit des Kraftfahrzeugs betreffende Aktoren, anzusteuern. Bei der Aktivierung der automatischen Distanzregelung werden also eine Aktivierungsanforderung dieser Kundenfahrzeugfunktion sowie entsprechende Steuerbefehle für die automatische Distanzregelung des Kraftfahrzeugs an die Auswerteeinheit des Fahrzeugreglers übermittelt. Die Auswerteeinheit ist daraufhin dazu ausgelegt zu bestimmen, welche der beiden Kundenfahrzeugfunktionen während der weiteren Fahrt des Kraftfahrzeugs aktiviert, deaktiviert oder pausiert werden sollte. In dieser Situation würde die Auswahlroutine typischerweise zu dem Ergebnis kommen, dass der Tempomat deaktiviert und stattdessen die automatische Distanzregelung die Steuerung des Kraftfahrzeugs übernimmt.

Die Ansteuerung des Kraftfahrzeugs, das heißt in dieser Situation das Beschleunigen und Bremsen des Kraftfahrzeugs, wird jedoch nicht direkt vom automatischen Distanzregler angesteuert, sondern vom zentralen Fahrzeugregler, der wiederum von seiner Auswerteeinheit Informationen dazu übermittelt bekommen hat, welche Kundenfahrzeugfunktionen welche Aktivierungszustände zugeordnet bekommen haben, und der daraufhin durch das Ansteuern der entsprechenden Fahrzeugfunktionen, das heißt beispielweise der Bremsen und des Antriebs des Kraftfahrzeugs, die Steuerbefehle des automatischen Distanzreglers umsetzt.

Mit dem erfindungsgemäßen Steuersystem können somit mehrere Kundenfahrzeugfunktionen über einen zentralen Fahrzeugregler mit einer zentralen Auswerteeinheit des Fahrzeugreglers koordiniert und letztendlich ausgeführt werden. Hierbei kann realisiert werden, dass es zu keiner widersprüchlichen Ansteuerung der Fahrzeugfunktionen zum Lenken, Bremsen und Beschleunigen des Kraftfahrzeugs aufgrund von nicht untereinander koordinierten Kundenfahrzeugfunktionen kommt. Letztendlich ermöglicht das Steuerungssystem, dass in einem Kraftfahrzeug zunächst geprüft wird, ob eine Kundenfahrzeugfunktion, die eine Aktivierungsanforderung aussendet, tatsächlich aktiv werden sollte oder ob sie dies beispielsweise aus Sicherheits- oder Komfortgründen nicht darf.

In einer weiteren vorteilhaften Ausgestaltung der Erfindung ist es vorgesehen, dass der Fahrzeugregler dazu eingerichtet ist, durch das Ansteuern der Fahrzeugfunktionen das Kraftfahrzeug zu lenken, zu bremsen und/oder zu beschleunigen. Der Fahrzeugregler stellt somit eine zentrale Einrichtung im Steuerungssystem und letztendlich auch im Kraftfahrzeug dar, mittels der das Kraftfahrzeug angesteuert werden kann. Der Fahrzeugregler kann somit auf die Lenkung, die Bremsen sowie die Motorsteuerung des Kraftfahrzeugs zugreifen. Der Fahrzeugregler stellt somit die Verbindungseinheit zwischen den einzelnen Kundenfahrzeugfunktionen und ihren entsprechenden Steuer- und Auswerteeinheiten und den einzelnen Fahrzeugfunktionen, bei denen es sich typischerweise um Aktoren, die elektrische Signale in mechanische Bewegungen umsetzen können, handelt, dar. Dies ist besonders vorteilhaft, da die Kundenfahrzeugsysteme nun nicht einzeln dazu ausgelegt sein müssen, die einzelnen Aktoren des Kraftfahrzeugs anzusteuern, beispielsweise über dafür ausgewählte Datenbusse zwischen den Steuereinheiten der Kundenfahrzeugsysteme und den Aktoren, sondern die Ansteuerung der Aktoren mithilfe entsprechender Kommunikationssignale an die Auswerteeinheit sowie den zentralen Fahrzeugregler selbst möglich ist. Durch diesen zentralen Fahrzeugregler ist es daher möglich, dass mithilfe einer Auswerteeinheit dieses zentralen Fahrzeugreglers zentral mit relativ geringem Aufwand das Koordinieren und Ausführen von Kundenfahrzeugfunktionen möglich ist.

In einer weiteren vorteilhaften Ausgestaltung der Erfindung ist es vorgesehen, dass die Kundenfahrzeugfunktionen Fahrerassistenzsysteme des Kraftfahrzeugs umfassen. Bei den Kundenfahrzeugfunktionen handelt es sich somit um elektronische Zusatzeinrichtungen in Kraftfahrzeugen zur Unterstützung des Benutzers des Kraftfahrzeugs in bestimmten Fahrsituationen. Eine Kundenfahrzeugfunktion kann beispielsweise eine automatische Distanzregelung, das heißt ein ACC-System, das häufig auch als Abstandsregeltempomat bezeichnet wird, ein Spurwechselassistent, eine Geschwindigkeitsregelanlage, das heißt ein Tempomat, ein Spurhalteassistent oder ein Einparkhilfeassistent sein. All diese Fahrerassistenzsysteme sind somit als Kundenfahrzeugfunktionen dazu eingerichtet, Fahrzeugfunktionen betreffende Aktivierungsanforderungen sowie dazugehörige Steuerbefehle für ihre jeweiligen Kundenfunktionen, das heißt die jeweiligen Assistenzfunktionen dieser Fahrerassistenzsysteme, an die Auswerteeinheit des Fahrzeugreglers zu übermitteln. Eine automatische Distanzregelung kann beispielsweise eine Aktivierungsanforderung sowie Steuerbefehle zur Distanzregelung des Kraftfahrzeugs an die Auswerteeinheit übermitteln. Mit dem erfindungsgemäßen Steuerungssystem, das bevorzugt alle Fahrerassistenzsysteme als Kundenfahrzeugfunktionen des Kraftfahrzeugs umfasst, ist somit eine besonders einfach zu organisierende Koordination zwischen den einzelnen Fahrerassistenzsystemen möglich, da auf alle Fahrerassistenzsysteme vom zentralen Fahrzeugregler und dessen Auswerteeinheit aus zugegriffen werden können.

In einer weiteren vorteilhaften Ausgestaltung der Erfindung ist es vorgesehen, dass die Auswerteeinheit dazu eingerichtet ist, zumindest zwischen den Aktivierungszuständen aktiv, inaktiv und pausiert einer Kundenfahrzeugfunktion zu unterscheiden. Die im Rahmen der Auswahlroutine bestimmten Aktivierungszustände der einzelnen Kundenfahrzeugfunktionen können daher von den einzelnen Kundenfahrzeugfunktionen umgesetzt werden, indem sich diese aktivieren, deaktivieren oder pausieren lassen, das heißt temporär nicht aktiv sind. Fährt das Kraftfahrzeug beispielsweise aktuell mithilfe einer Geschwindigkeitsregelanlage mit einer vorgegebenen Geschwindigkeit auf einer Schnellstraße, sind bei einer Aktivierungsanforderung einer anderen Kundenfahrzeugfunktion, wie beispielsweise einem Spurwechselassistenten oder einer automatischen Distanzregelung verschiedene im Rahmen der Auswahlroutine bestimmte Aktivierungszustände für die Geschwindigkeitsregelanlage möglich. Bei einer Aktivierungsanforderung durch den Spurwechselassistenten ist es möglich, dass die Geschwindigkeitsregelanlage weiterhin aktiv bleibt oder gegebenenfalls pausiert wird. Handelt es sich bei der durch die Aktivierungsanforderung übermittelten Kundenfahrzeugfunktion jedoch um eine automatische Distanzregelung, ist es eher zu erwarten, dass es zu einer Deaktivierung der Geschwindigkeitsregelanlage kommt und diese daher den Aktivierungszustand inaktiv zugeordnet bekommt. Mithilfe der drei Aktivierungszustände aktiv, inaktiv und pausiert können somit zahlreiche Kombinationen von Kundenfahrzeugfunktionen koordiniert und letztendlich gemäß der zugeordneten Aktivierungszustände durchgeführt werden. Diese drei Aktivierungszustände sind zudem eindeutig, sodass widersprüchliche Ansteuerungen aufgrund von nicht eindeutig zugeordneten Aktivierungszuständen beziehungsweise Auswertungen der Auswahlroutine vermieden werden können.

In einer weiteren vorteilhaften Ausgestaltung der Erfindung ist es vorgesehen, dass falls keine Kundenfahrzeugfunktion aktiviert ist, die Auswerteeinheit dazu eingerichtet ist, der aktuell inaktiven Kundenfahrzeugfunktion, die als erstes die Aktivierungsanforderung übermittelt, mit dem an diese Kundenfahrzeugfunktion übermittelten Aktivierungszustand eine Erlaubnis zur Aktivierung zu erteilen. Ist also zunächst keine Kundenfahrzeugfunktion in einem aktivierten Zustand im Kraftfahrzeug vorhanden, kommt es zu einer automatischen Aktivierung der Kundenfahrzeugfunktion, die als nächstes eine entsprechende Aktivierungsanforderung an die Auswerteeinheit des Fahrzeugreglers übermittelt. Es ist also in dieser Situation nicht relevant, welche Kundenfahrzeugfunktion eine Aktivierungsanforderung an die Auswerteeinheit übermittelt, da lediglich die als erstes übermittelte beziehungsweise die als erstes von der Auswerteeinheit empfangene Aktivierungsanforderung dazu führt, dass der entsprechenden Kundenfahrzeugfunktion die Information übermittelt wird, dass diese Kundenfahrzeugfunktion aktiv werden darf. Wird beispielsweise ein Kraftfahrzeug von einem Benutzer des Kraftfahrzeugs manuell auf einer Straße angesteuert, kommt es bei einer Aktivierung der automatischen Distanzregelung durch den Benutzer des Kraftfahrzeugs zu einer automatischen Aktivierung dieser Kundenfahrzeugfunktion ohne weitere Koordinierung oder Auswertung der Aktivierungsanforderung sowie der dazugehörigen Steuerbefehle der automatischen Distanzregelung. Hierdurch ist besonders vorteilhaft das Aktivieren einer ersten Kundenfahrzeugfunktion im Kraftfahrzeug möglich.

Erfindungsgemäß ist vorgesehen, dass, falls bereits eine Kundenfahrzeugfunktion aktiviert ist, die Auswerteeinheit dazu eingerichtet ist, sobald sie die Aktivierungsanforderung einer aktuell inaktiven Kundenfahrzeugfunktion empfängt, im Rahmen der Auswahlroutine ein vorbestimmtes Übergangsszenario zwischen den beiden Kundenfahrzeugfunktionen zu bestimmen und entsprechend dem bestimmten Übergangsszenario jeder der beiden Kundenfahrzeugfunktionen einen vorbestimmten Aktivierungszustand zuzuordnen und an diese zu übermitteln. Falls also eine bisher nicht aktive Kundenfahrzeugfunktion eine Aktivierungsanforderung an die Auswerteeinheit übermittelt, obwohl bereits eine andere Kundenfahrzeugfunktion aktiv ist, sind verschiedene Koordinationsszenarien, zwischen den nun um Aktivierung konkurrierenden Kundenfahrzeugfunktionen vorgegeben. Anhand dieser als Übergangsszenarien bezeichneten Koordinationsszenarien bestimmt die Auswahlroutine, welche Kundenfahrzeugfunktion aktiviert, deaktiviert oder pausiert wird, beziehungsweise die entsprechende Information erhält, sich aktivieren, deaktivieren oder pausieren zu dürfen. Im Rahmen dieser Übergangsszenarien kommt es somit zu verschiedenen Kombinationen von Aktivierungszuständen der bereits aktiven Kundenfunktion und der noch inaktiven Kundenfahrzeugfunktion, die eine Aktivierungsanforderung an die Auswerteeinheit übermittelt hat.

Im Rahmen der Auswahlroutine kann somit beispielsweise bestimmt werden, ob es zu einer Übernahme der Ansteuerung der Fahrzeugfunktionen durch Steuerbefehl der aktuell inaktiven Kundenfahrzeugfunktion, die eine Aktivierungsanforderung an die Auswerteeinheit übermittelt hat, kommt. Ist beispielsweise zunächst die Geschwindigkeitsregeleinheit aktiviert, kann bei einer Aktivierungsanforderung des automatischen Distanzreglers eine solche Übernahme der Ansteuerung der Fahrzeugfunktionen durch Steuerbefehle des bisher inaktiven automatischen Distanzreglers im Rahmen der Auswahlroutine bestimmt werden und die entsprechenden Aktivierungszustände an die beiden Kundenfahrzeugfunktionen übermittelt werden. In dieser Situation würde der Geschwindigkeitsregeleinheit der Aktivierungszustand inaktiv, das heißt die Aufforderung, sich zu deaktivieren, übermittelt werden und der automatischen Distanzregelung der Aktivierungszustand aktiv, das heißt die Erlaubnis zur Aktivierung übermittelt werden. Mithilfe der Übergangsszenarien ist somit basierend auf in der Auswerteeinheit hinterlegten Vorschriften eine besonders vorteilhafte und schnelle Koordinierung der Kundenfahrzeugfunktionen möglich.

Erfindungsgemäß ist die Auswerteeinheit eingerichtet, im Rahmen der Auswahlroutine folgendes vorbestimmtes Übergangsszenario zwischen den beiden Kundenfahrzeugfunktionen zu bestimmen, um die beiden jeweiligen Kundenfahrzeugfunktionen untereinander zu koordinieren: eine Reservierung der Ansteuerung der Fahrzeugfunktionen durch Steuerbefehle der aktuell inaktiven Kundenfahrzeugfunktion, bis vorbestimmte Aktivierungsbedingungen erfüllt sind.

In einer weiteren vorteilhaften Ausgestaltung der Erfindung ist es vorgesehen, dass die Auswerteeinheit dazu eingerichtet ist, im Rahmen der Auswahlroutine eines der weiteren folgenden vorbestimmten Übergangsszenarien zwischen den beiden Kundenfahrzeugfunktionen zu bestimmen, um die beiden jeweiligen Kundenfunktionen untereinander zu koordinieren. Bei diesen Übergangsszenarien handelt es sich um eine Übernahme der Ansteuerung der Fahrzeugfunktion durch Steuerbefehl der aktuell inaktiven Kundenfahrzeugfunktion, eine Übersteuerung der Ansteuerung der Fahrzeugfunktion durch Steuerbefehle der aktuell inaktiven Kundenfahrzeugfunktion ohne Inaktivierung der aktiven Kundenfahrzeugfunktion, eine Parallelansteuerung der Fahrzeugfunktion durch Steuerbefehl der aktiven und der aktuell inaktiven Kundenfahrzeugfunktionen, eine Unterbindung der Ansteuerung der Fahrzeugfunktion durch Steuerbefehl der aktuell inaktiven Kundenfahrzeugfunktion.

Zur Koordinierung, welche Kundenfahrzeugfunktion aktiviert, deaktiviert oder pausiert werden soll, sind somit fünf verschiedene sogenannte Übergangsszenarien vorgesehen. Beim Übergangsszenario Übernahme wird der aktuell inaktiven Kundenfahrzeugfunktion der Aktivierungszustand aktiv und der bisher aktiven Kundenfahrzeugfunktion der Aktivierungszustand inaktiv zugeordnet und an diese übermittelt.

Beim Übergangsszenario Übersteuerung wird der aktuell inaktiven Kundenfahrzeugfunktion der Aktivierungszustand aktiv zugeordnet, wobei die bisher aktive Kundenfahrzeugfunktion nicht den Aktivierungszustand inaktiv, sondern den Aktivierungszustand pausiert zugeordnet und übermittelt bekommt. Die bisher aktive Kundenfunktion bleibt also weiterhin passiv aktiv in einem On-Hold-Zustand. Sobald die übersteuernde Kundenfahrzeugfunktion ihre Kundenfunktion durchgeführt und sich deaktiviert hat, kann die zuvor aktive Kundenfahrzeugfunktion ihren pausierten Zustand beenden und wieder aktiv werden. Die Übersteuerung stellt somit eine temporäre Ansteuerung der Fahrzeugfunktion durch Steuerbefehle der aktuell inaktiven Kundenfahrzeugfunktion, die eine Aktivierungsanforderung an die Auswerteeinheit übermittelt hat, dar.

Beim Übergangsszenario Parallelansteuerung wird der aktuell inaktiven Kundenfahrzeugfunktion der Aktivierungszustand aktiv zugeordnet und der bisher aktiven Kundenfahrzeugfunktion ebenfalls der Aktivierungszustand aktiv. Bei diesem Übergangsszenario sind somit beide Kundenfahrzeugfunktionen gleichzeitig weiterhin aktiv und greifen auf die entsprechenden Fahrzeugfunktionen zur entsprechenden Ansteuerung des Fahrzeugreglers zu. Wenn sowohl die aktuell inaktive als auch die bisher aktive Kundenfahrzeugfunktion auf die gleiche Fahrzeugfunktion zugreifen, wird durch eine vorgegebene Vorschrift vorgegeben, wie die Steuerbefehle der nun parallel aktiven Kundenfahrzeugfunktionen durchgeführt werden. Als eine solche Vorschrift können beispielsweise Minimal- und Maximalwerte für die Ansteuerung der entsprechenden Fahrzeugfunktion vorgegeben sein.

Beim Übergangsszenario Unterbindung wird der aktuell inaktiven Kundenfahrzeugfunktion der Aktivierungszustand inaktiv zugeordnet und der bisher aktiven Kundenfahrzeugfunktion weiterhin der Aktivierungszustand aktiv. Bei diesem Übergangsszenario wird also eine Ansteuerung der Fahrzeugfunktion gemäß der Steuerbefehle der bisher inaktiven Kundenfahrzeugfunktion, die eine Aktivierungsanforderung an die Auswerteeinheit übermittelt hat, abgelehnt und es kommt zu einer weiteren Ansteuerung des Kraftfahrzeugs gemäß der bereits aktiven Kundenfahrzeugfunktion, die aktiv verbleibt.

Bei dem Übergangszenario Reservierung wird die aktuell inaktive Kundenfahrzeugfunktion, die eine Aktivierungsanforderung an die Auswerteeinheit übermittelt, aufgrund der aktuell aktiven Kundenfahrzeugfunktion pausiert und muss warten, bis die aktuell aktive Kundenfahrzeugfunktion inaktiv wird. Die aktuell inaktive Kundenfahrzeugfunktion, die eine Aktivierungsanforderung an die Auswerteeinheit übermittelt hat, befindet sich bei diesem Übergangsszenario somit in einer Art Warteposition und reserviert für sich die Aktivierung, bis sie tatsächlich aktiv werden darf und die bisher aktivierte Kundenfahrzeugfunktion inaktiv wird.

Eine Übernahme der Ansteuerung der Fahrzeugfunktion durch Steuerbefehl der aktuell aktiven Kundenfahrzeugfunktion, findet beispielsweise statt, wenn es sich bei der aktiven Kundenfahrzeugfunktion um eine Geschwindigkeitsregelanlage, das heißt einen Tempomaten, handelt und bei der aktuell inaktiven Kundenfahrzeugfunktion, die eine Aktivierungsanforderung an die Auswerteeinheit des Fahrzeugreglers übermittelt, um eine automatische Distanzregelung, das heißt ein ACC-System, handelt. In dieser Situation wird der Geschwindigkeitsregeleinheit anhand des Aktivierungszustands mitgeteilt, dass sich diese Kundenfahrzeugfunktion deaktivieren soll, wohingegen die automatische Distanzregelung eine Erlaubnis zur Aktivierung und somit zur Übernahme der Ansteuerung der entsprechenden Fahrzeugfunktionen übermittelt bekommt.

Eine Übersteuerung der Ansteuerung der Fahrzeugfunktion durch Steuerbefehl der aktiven Kundenfahrzeugfunktion ohne Inaktivierung der aktiven Kundenfahrzeugfunktion findet beispielsweise statt, wenn es sich bei der bisher aktiven Kundenfahrzeugfunktion um einen Spurhalteassistenten und bei der aktuell inaktiven Kundenfahrzeugfunktion um einen Spurwechselassistenten handelt. Der Spurhalteassistent strebt mit seinen Steuerbefehlen lediglich einen Eingriff in die Querführung des Kraftfahrzeugs an. Der Spurwechselassistent strebt ebenfalls einen Eingriff in die Querführung und somit die Lenkung des Kraftfahrzeugs an, jedoch handelt es sich bei dieser Kundenfahrzeugfunktion um eine in der Regel zeitlich begrenzt aktive Kundenfahrzeugfunktion. Der Spurhalteassistent als bereits aktive Kundenfahrzeugfunktion wird daher zunächst von der Auswerteeinheit darüber informiert, dass er pausiert wird, wohingegen der Spurwechselassistent die Erlaubnis zur Aktivierung anhand des entsprechend übermittelten Aktivierungszustands erhält. Nach dem Spurwechsel, das heißt nachdem der Spurwechselassistent seine entsprechende Kundenfunktion, das heißt den Spurwechsel, durchgeführt hat, kommt es jedoch zu einer erneuten Aktivierung und somit einem Beenden des Pausierens des Spurhalteassistenten. Der Spurwechselassistent übersteuert somit für den Zeitraum der Durchführung seiner Kundenfunktion den Spurhalteassistenten.

Eine Parallelsteuerung der Fahrzeugfunktionen durch Steuerbefehle der aktiven und der aktuell inaktiven Kundenfahrzeugfunktion findet beispielsweise dann statt, wenn als bereits aktive Kundenfahrzeugfunktion der Spurhalteassistent aktiviert ist und eine automatische Abstandsregelung, das heißt ein ACC-System, eine entsprechende Aktivierungsanforderung an die Auswerteeinheit übermittelt. Der Spurhalteassistent greift mit seiner Kundenfunktion lediglich in die Querrichtung des Kraftfahrzeugs ein, wohingegen die automatische Abstandsregelung eine Ansteuerung des Kraftfahrzeugs betreffend die Längsrichtung des Kraftfahrzeugs anstrebt, da die Umsetzung der Kundenfunktion dieser Kundenfahrzeugfunktion die Beschleunigung und das Bremsen des Kraftfahrzeugs beeinflusst. Diese beiden Kundenfahrzeugfunktionen können gemäß des Übergangszenarios Parallelansteuerung daher parallel aktiv sein.

Bei einem weiteren Beispiel für eine Parallelsteuerung der Fahrzeugfunktionen handelt es sich bei der bereits aktiven Kundenfahrzeugfunktion um einen Speedlimiter, der ein Tempolimit vorgibt, und bei der bisher inaktiven Kundenfahrzeugfunktion um einen Geschwindigkeitsregler. Diese beiden Kundenfahrzeugfunktion können parallel aktiviert sein, jedoch ist durch den Speedlimiter eine maximale Geschwindigkeit vorgegeben, deren Überschreiten durch Steuerbefehle des Geschwindigkeitsreglers nicht möglich ist. Es ist also in diesem Beispiel eine Vorschrift bezüglich eines Maximalwerts für die Ansteuerung der entsprechenden Fahrzeugfunktion vorgegeben. Handelt es sich bei den beiden parallel aktiven Kundenfahrzeugfunktionen jedoch beispielsweise um einen Notbremsassistenten und einen Abstandsregler kann als Vorschrift anstelle eines vorbestimmten Maximalwerts vorgegeben sein, dass bei einem Bremsbefehl beider Kundenfahrzeugfunktionen stets die stärkere Verzögerung des Kraftfahrzeugs vom Fahrzeugregler durchgeführt wird.

Eine Unterbindung der Ansteuerung der Fahrzeugfunktion der Steuerbefehle der aktuell inaktiven Kundenfahrzeugfunktion findet beispielsweise dann eine Anwendung, wenn als bisher aktive Kundenfahrzeugfunktion ein Autobahnpilot zum autonomen Fahren auf einer Schnellstraße aktiv ist. Folgt nun eine Aktivierungsanforderung einer beliebigen anderen Kundenfahrzeugfunktion, wie beispielsweise der automatischen Distanzregelung, kommt es zu keiner Aktivierung der automatischen Distanzregelung, sondern zu einem Aktivierungsverbot dieser Kundenfahrzeugfunktion, da für das autonome Fahren auf der Schnellstraße der Autobahnpilot alle notwendigen Fahrzeugfunktionen ansteuern kann, daher Vorrang hat und somit weiterhin aktiv bleibt.

Beim Übergangsszenario Unterbindung kann die bisher aktive Kundenfahrzeugfunktion unter bestimmten Umständen auch im Aktivierungszustand pausiert sein. Dies ist beispielsweise dann der Fall, wenn eine Kundenfahrzeugfunktion A eine Kundenfahrzeugfunktion B übersteuert hat, wodurch Kundenfahrzeugfunktion A aktiv und Kundenfahrzeugfunktion B pausiert ist. Eine weitere Kundenfahrzeugfunktion C, die aktuell inaktiv ist, könnte dann von der aktuell pausierten Kundenfahrzeugfunktion B unterbunden werden.

Eine Reservierung der Ansteuerung der Fahrzeugfunktion durch Steuerbefehl der aktuell inaktiven Kundenfahrzeugfunktion, bis vorbestimmte Aktivierungsbedingungen erfüllt sind, findet beispielsweise Anwendung, wenn es sich bei der bereits aktiven Kundenfahrzeugfunktion um eine automatische Distanzregelung und bei der aktuell inaktiven Kundenfahrzeugfunktion um einen intelligenten Parkhilfeassistenten handelt. Die automatische Distanzregelung würde in dieser Situation solange aktiv bleiben, bis tatsächlich eine Parklücke für das Kraftfahrzeug entdeckt und ausgewählt wurde, in die das Kraftfahrzeug mithilfe des intelligenten Parkhilfeassistenten eingeparkt werden soll. Erst wenn dieser Parkplatz ausgewählt und das Kraftfahrzeug in einer entsprechenden Startposition für den Einparkvorgang angekommen ist, kommt es zu einer Deaktivierung der automatischen Abstandsregelung und der bis zu diesem Zeitpunkt noch pausierte intelligente Parkhilfeassistent wird tatsächlich aktiv beziehungsweise erhält die entsprechenden Aktivierungszustände zugeordnet und übermittelt. Der intelligente Parkhilfeassistent befindet sich somit solange auf einer Warteposition zu seiner Aktivierung, bis die Voraussetzungen für dessen Aktivierung und der damit verbundenen Durchführung seiner Kundenfunktion, das heißt des intelligenten Einparkens, gegeben sind.

Mithilfe der beschriebenen Übergangsszenarien kann somit verhindert werden, dass es zu einer widersprüchlichen Ansteuerung der Fahrzeugfunktionen des Kraftfahrzeugs durch den Fahrzeugregler aufgrund entsprechender Steuerbefehle der einzelnen Kundenfahrzeugfunktionen kommt.

In einer weiteren vorteilhaften Ausgestaltung der Erfindung ist es vorgesehen, dass die Auswerteeinheit dazu ausgelegt ist, in vorbestimmten Zeitabständen die Auswahlroutine durchzuführen und die jeweils dabei bestimmten aktuellen Aktivierungszustände an die entsprechende Kundenfahrzeugfunktion zu übermitteln. Die Koordinierung der einzelnen Kundenfahrzeugfunktionen findet also nicht einmalig, sondern in festgelegten Zyklen immer wieder erneut statt. Hierfür findet in bestimmten Zeitintervallen die Auswahlroutine statt, bei der bestimmt wird, welcher vorbestimmte Aktivierungszustand der aktuell inaktiven Kundenfahrzeugfunktion und der bereits aktiven Kundenfahrzeugfunktion zugeordnet werden soll und darf. In den vorbestimmten Zeitabständen wird sowohl den Kundenfahrzeugfunktionen als auch dem Fahrzeugregler das Ergebnis der Auswahlroutine in Form der bestimmten Aktivierungszustände übersendet. In dem Kraftfahrzeug kann daher beispielsweise alle 20 Millisekunden eine neue Bestimmung und erneute Übermittlung der Aktivierungszustände an die Kundenfahrzeugfunktionen sowie den Fahrzeugregler stattfinden. Hierdurch ist es möglich, dass allen Komponenten des Steuerungssystems stets möglichst aktuelle und somit gültige Informationen bezüglich der Koordinierung und Ausführung der Kundenfahrzeugfunktionen vorliegen.

Alternativ oder zusätzlich zu der Durchführung der Auswahlroutine in vorbestimmten Zeitabständen kann diese auch immer dann erfolgen, wenn eine Kundenfahrzeugfunktion ihren Aktivierungszustand ändert und den neuen Aktivierungszustand an die Auswerteeinheit übermittelt. Die Durchführung der Auswahlroutine kann somit auch ereignisabhängig erfolgen.

Es ist zudem möglich, dass nicht nur die Kundenfahrzeugfunktionen, die aktiv sind beziehungsweise eine Aktivierungsanforderung an die Auswerteeinheit übermittelt haben, über die aktuellen Aktivierungszustände informiert werden, sondern dass alle Kundenfahrzeugfunktionen im Kraftfahrzeug stets über die aktuellen Aktivierungszustände informiert werden, da ihnen diese übermittelt werden. Alternativ dazu ist auch eine dynamische Steuerung der Übermittlung der Aktivierungszustände an die Kundenfahrzeugfunktionen möglich, beispielsweise indem alle bei dieser Benutzung des Kraftfahrzeugs aktiven oder bereits aktiv gewesenen Kundenfahrzeugfunktionen bei der Auswerteeinheit angemeldet sind und während dieser Benutzung über ihre jeweiligen aktuellen Aktivierungszustände informiert werden.

In einer weiteren vorteilhaften Ausgestaltung der Erfindung ist es vorgesehen, dass, falls mehrere Kundenfahrzeugfunktionen innerhalb eines gemeinsamen Zeitintervalls Aktivierungsanforderungen an die Auswerteeinheit übermitteln, diese dazu ausgelegt ist, die Auswahlroutine für jede Aktivierungsanforderung einzeln und in der Reihenfolge, in der die gültigen Aktivierungsanforderungen von der Auswerteeinheit erstmalig empfangen wurden, durchzuführen. Bei in etwa gleichzeitig von der Auswerteeinheit empfangenen Aktivierungsanforderungen mehrerer Kundenfahrzeugfunktionen erfolgt die Koordinierung der Ausführung dieser Kundenfahrzeugfunktionen im Rahmen des Steuerungssystems also in der Reihenfolge der Anfragen der Kundenfahrzeugfunktionen. In der Regel wird hierbei die als erstes empfangene Aktivierungsanforderung eines Kundenfahrzeugsystems im Rahmen der Auswahlroutine mit der bereits aktiven Kundenfahrzeugfunktion in Bezug gesetzt und das entsprechende Übergangsszenario und somit die entsprechenden Aktivierungszustände der beiden Kundenfahrzeugfunktionen ermittelt. Daraufhin wird basierend auf dem Ergebnis dieser Auswahlroutine die Kundenfahrzeugfunktion, die als nächstes eine Aktivierungsanforderung an die Auswerteeinheit übermittelte, in einer nächsten Auswahlroutine mit den Kundenfahrzeugfunktionen in Bezug gesetzt, die bei der zuvor stattgefundenen ersten Auswertungsroutine als die nun aktiven beziehungsweise pausierten Kundenfahrzeugfunktion bestimmt wurden.

Falls es bei einer Auswahlroutine zu dem Ergebnis kam, dass zwei Kundenfahrzeugfunktionen parallel aktiviert sind, werden bei einer Aktivierungsanforderung einer weiteren Kundenfahrzeugfunktion die Übergangsszenarien zu beiden aktiven Kundenfahrzeugfunktionen überprüft und die entsprechenden Aktivierungsanforderungen an alle beteiligten Kundenfahrzeugfunktionen übermittelt. Auch wenn es in dieser Situation zur Überprüfung mehrerer Übergangsszenarien zwischen einzelnen Kundenfahrzeugfunktionen kommt, bleibt es weiterhin bei der Durchführung der Auswahlroutine für jeweils eine einzelne Kundenfahrzeugfunktion, die eine Aktivierungsanforderung an die Auswerteeinheit übermittelt hat. Hierdurch werden mögliche Widersprüche in der Aktivierung von Kundenfahrzeugfunktionen besonders vorteilhaft reduziert oder verhindert.

Im Rahmen der Auswahlroutine wird also die Aktivierungsanforderung hinsichtlich aller aktiven und pausierten Kundenfahrzeugfunktionen geprüft. Falls es hierbei zu voneinander abweichenden Ergebnissen hinsichtlich der Aktivierung einer Kundenfahrzeugfunktion unter Berücksichtigung von mehreren aktiven und pausierten Kundenfahrzeugfunktionen kommt, erfolgt die Auswahl nach der folgenden Priorisierungsreihenfolge beginnend mit dem Übergangsszenario mit der höchsten Priorität: Unterbindung, Reservierung, Übernahme, Übersteuerung, Parallelansteuerung.

Sind beispielsweise die beiden Kundenfahrzeugfunktionen A und B aktiv, übermittelt die Kundenfahrzeugfunktion C eine Aktivierungsanforderung und würde es bei der Kundenfahrzeugfunktionskombination A-C zu einer Übernahme durch C, bei der Kundenfahrzeugfunktionskombination B-C jedoch zu einer Reservierung kommen, wird gemäß der Priorisierungsreihenfolge das Übergangsszenario Reservierung von der Kundenfahrzeugfunktion B zur Kundenfahrzeugfunktion C aufgrund der höheren Priorität dieses Übergangsszenarios ausgewählt. Es kommt daher zu keiner Übernahme der Kundenfahrzeugfunktion A durch die Kundenfahrzeugfunktion C, das heißt die Kundenfahrzeugfunktion A bleibt aktiviert. Wäre jedoch die Kundenfahrzeugfunktion C gegenüber der Kundenfahrzeugfunktion B mit dem Übergangsszenario Übersteuerung belegt, würde die Kundenfahrzeugfunktion A aufgrund der Übernahme durch C deaktiviert und die Kundenfahrzeugfunktion B aufgrund der Übersteuerung durch C pausiert werden. Die Kundenfahrzeugfunktion C wäre daraufhin aktiv.

Kommt es beispielsweise zu einer Übernahme durch den automatischen Distanzregler über die bisher aktive Geschwindigkeitsregelanlage, wird im Falle einer nächsten empfangenen Aktivierungsanforderung, beispielsweise durch den Parkhilfeassistenten, nicht die Auswahlroutine zwischen der bereits übersteuerten Geschwindigkeitsregelanlage und dem Parkhilfeassistenten durchgeführt, sondern lediglich eine Auswahlroutine zwischen dem nun aktiven automatischen Distanzregler und dem Parkhilfeassistenten durchgeführt.

In einer weiteren vorteilhaften Ausgestaltung der Erfindung ist es vorgesehen, dass die Kundenfahrzeugfunktionen Bestätigungen zumindest eines Bedienelements des Kraftfahrzeugs durch einen Nutzer des Kraftfahrzeugs zum manuellen Ansteuern einer fahrzeugseitigen Ausführungseinheit, die signaltechnisch mit dem Bedienelement gekoppelt und mechanisch von dem Bedienelement entkoppelt ist, umfassen. Bei den Kundenfahrzeugfunktionen muss es sich somit nicht zwangsläufig um Fahrerassistenzsysteme des Kraftfahrzeugs handeln, sondern als Kundenfahrzeugfunktion kann auch der Eintrag beziehungsweise die Beeinflussung des Benutzers des Kraftfahrzeugs auf die Fahrzeugfunktionen des Kraftfahrzeugs betrachtet werden. Dies ist dann möglich, falls das Kraftfahrzeug über elektrisch gekoppelte Bremsen, eine elektrisch gekoppelte Beschleunigung und/oder eine elektrisch gekoppelte Lenkung verfügt.

Bei einer elektrisch gekoppelten Lenkung, einer sogenannten Steer-by-Wire, wird ein Lenkbefehl von einem Sensor, der sich in der Regel im Lenkrad befindet, über ein Steuergerät ausschließlich elektrisch zum elektromechanischen Aktor, der den Lenkbefehl ausführt, weitergeleitet. Bei einem derartigen System besteht somit keine mechanische Verbindung zwischen dem Lenkrad und den gelenkten Rädern. Ähnlich dazu kommt es bei einem elektrisch gekoppelten Bremssystem, einem Brake-by-Wire, ebenfalls zu der Situation, dass die Betätigungseinrichtung dieses Bremssystems von einer Übertragungseinrichtung des Bremsbefehls mechanisch entkoppelt ist. Analog dazu kann auch ein elektrisch und mechanisch entkoppeltes Fahrpedal, ein Drive-by-Wire, im Kraftfahrzeug vorgesehen sein. Die bei dieser Art der manuellen Steuerung des Kraftfahrzeugs erzeugten Steuersignale des Benutzers des Kraftfahrzeugs können somit, analog zu den Signalen klassischer Fahrerassistenzsysteme, als Steuerbefehle von Kundenfahrzeugfunktionen betrachtet werden. Diese Steuerbefehle sowie entsprechende Aktivierungsanforderungen für die Durchführung dieser Steuerbefehle werden ebenfalls über die Auswerteeinheit des Fahrzeugreglers koordiniert und letztendlich deren Ausführung vom Fahrzeugregler erlaubt beziehungsweise verhindert.

Ein Beispiel für eine derartige Kundenfahrzeugfunktion wäre beispielsweise eine Betätigung eines elektrischen Fahrpedals durch einen Nutzer des Kraftfahrzeugs, ein Benutzen des Bremspedals des Kraftfahrzeugs durch den Benutzer oder eine entsprechende Betätigung des elektrischen Lenkrads. Indem ein Beitrag eines Benutzers, beispielsweise eines Fahrers des Kraftfahrzeugs, wie ein Fahrerassistenzsystem als Kundenfahrzeugfunktion betrachtet wird, kann mithilfe des Steuerungssystems auch die Koordinierung zwischen manuellen Ansteuerungsbefehlen des Benutzers des Kraftfahrzeugs und aktiven sowie bisher inaktiven Kundenfahrzeugfunktionen besonders vorteilhaft ermöglicht werden.

In einer weiteren vorteilhaften Ausgestaltung der Erfindung ist es vorgesehen, dass, falls die Betätigung des Benutzers des Kraftfahrzeugs als entsprechende Aktivierungsanforderung an die Auswerteeinheit ermittelt wird, die Auswerteeinheit dazu eingerichtet ist, im Rahmen der Auswahlroutine weitere vorgegebene Auswahlkriterien zu berücksichtigen. Falls als Kundenfahrzeugfunktion also eine Betätigung zumindest eines Bedienelements des Kraftfahrzeugs durch einen Benutzer des Kraftfahrzeugs zur manuellen Ansteuerung einer fahrzeugseitigen Ausführungseinheit vorliegt, wird diese Betätigung nicht zwangsläufig als fest definierte Kundenfahrzeugfunktion, für die fest definierte Regeln bei der Auswertungsroutine und den dabei berücksichtigten Übergangsszenarien vorliegen, betrachtet. Es ist bei einer derartigen Kundenfahrzeugfunktion nämlich möglich, dass im Rahmen der Auswahlroutine zusätzliche vorgegebene Bedingungen, sogenannte Auswahlkriterien, hinzugezogen werden, um die entsprechenden Aktivierungszustände der beteiligten Kundenfahrzeugfunktionen bestimmen zu können.

Anhand der vorgegebenen Auswahlkriterien ist es beispielsweise möglich, dass im Steuerungssystem, das heißt in der Auswerteeinheit des Fahrzeugreglers, hinterlegt ist, dass ein Bremswunsch des Benutzers des Kraftfahrzeugs jegliche Fahrerassistenzsysteme übersteuert, und zwar auch dann, wenn der Bremswunsch des Benutzers schwächer ist als eine Bremsanforderung einer bisher aktiven Kundenfahrzeugfunktion, wie beispielsweise einer automatischen Distanzregelung. Hierdurch wäre es beispielsweise möglich, dass bei einem manuellen Bremsen des Benutzers des Kraftfahrzeugs stets die bisher aktivierte Kundenfahrzeugfunktion deaktiviert werden muss, das heißt die entsprechenden Aktivierungszustände übermittelt bekommt, wohingegen der Benutzerwunsch, das heißt der Input des Benutzers durch seine Betätigung des entsprechenden Bedienelements, stets zu einer Übersteuerung führt. Es wäre jedoch auch möglich, dass der Bremswunsch des Benutzers nur dann zur Ansteuerung der Bremse des Kraftfahrzeugs durch den Fahrzeugregler berücksichtigt wird, wenn die vom Benutzer gewünschte Bremsbeschleunigung betragsmäßig größer oder gleich der von der aktuellen Kundenfahrzeugfunktion vorgesehenen Bremsbeschleunigung ist. Beispielsweise würde es somit bei einer aktivierten Geschwindigkeitsregelanlage nur dann zu einer Aktivierung oder zumindest Pausierung der Geschwindigkeitsregelanlage kommen, falls der Benutzer stärker bremst, als es die Geschwindigkeitsregelanlage anhand ihrer Steuerungsbefehle vorsieht. Je nach vorgegebenen Auswahlkriterien könnte es jedoch in diesem Fall auch zu einer Übernahme oder einer Übersteuerung der Geschwindigkeitsregelanlage durch den Benutzerbremswunsch kommen. Durch die Berücksichtigung der Betätigung eines Bedienelements des Kraftfahrzeugs durch den Benutzer des Kraftfahrzeugs als Kundenfahrzeugfunktion wird somit ein besonders differenziertes Steuerungssystem zum Koordinieren und Ausführen von Kundenfahrzeugfunktionen sowie manuellen Benutzerwünschen des Kraftfahrzeugs ermöglicht.

In einer weiteren vorteilhaften Ausgestaltung der Erfindung ist es vorgesehen, dass die Kundenfahrzeugfunktionen dazu ausgelegt sind, zusätzlich zu den jeweiligen Aktivierungsanforderungen und den zugehörigen Steuerbefehlen einen die jeweilige Kundenfunktion beschreibenden Aufgabenschlüssel an die Auswerteeinheit zu übermitteln, wobei der Fahrzeugregler dazu eingerichtet ist, vorbestimmte Aufgaben anzubieten, deren Aufgabenschlüssel in der Auswerteeinheit hinterlegt sind, und in das Steuerungssystem zusätzlich Kundenfahrzeugfunktionen integrierbar sind, falls die jeweilige Kundenfunktionen dieser Kundenfahrzeugfunktion mit den der Auswerteeinheit bekannten Aufgabenschlüsseln beschreibbar sind. Die Kundenfahrzeugfunktionen sind somit dazu eingerichtet, zusätzlich zu den bereits genannten Aktivierungsanforderungen und den Steuerbefehlen jeweils Signalinformationen zu der Rolle der jeweiligen Kundenfunktion im Kraftfahrzeug, als sogenannter Aufgabenschlüssel, an die Auswerteeinheit zu senden. Der Auswerteeinheit liegen somit Informationen über genau definierte Aufgaben einzelner Kundenfahrzeugsysteme vor. Diese Aufgaben sind in der Auswerteeinheit in Form von klar definierten Aufgabenschlüsseln abgespeichert. Die zentrale Auswerteeinheit sowie der Fahrzeugregler sind somit letztendlich dazu eingerichtet, verschiedene Services anzubieten, wie beispielsweise eine Geschwindigkeit einzustellen, eine Notbremsung durchzuführen oder bestimmte Vorgaben der Lenkungsführung durchzuführen.

Weitere Aufgaben, die bisher nicht in der Auswerteeinheit hinterlegt sind, können durch ein Update der Auswerteeinheit neu hinzugefügt und somit vom Fahrzeugregler und seiner Auswerteeinheit erlernt werden. Dies ermöglicht, dass auch in einem bereits ausgelieferten Kraftfahrzeug neue beziehungsweise überarbeitete Kundenfahrzeugfunktionen hinzugefügt werden können. Die Auswerteeinheit kann zudem dazu eingerichtet sein, die ermittelten Aufgabenschlüssel mit den ihr bekannten Rollen zu vergleichen. Handelt es sich bei einem bestimmten Aufgabenschlüssel beispielsweise um den Aufgabenschlüssel Einparken, vergleicht die Auswerteeinheit diese Information zunächst mit den ihr vorliegenden Aufgaben von Kundenfahrzeugfunktionen. Ist ihr die Aufgabe Einparken bekannt, liegen ihr Information darüber vor, welche Fahrzeugfunktionen im Rahmen dieser Aufgabe angesteuert werden müssen sowie Informationen zu den entsprechenden Übergangszenarien zwischen verschiedenen Kundenfahrzeugfunktionen im Rahmen der Auswahlroutine.

Alternativ dazu ist es auch möglich, dass unabhängig von den übermittelten Aufgabenschlüsseln durch ein generelles Update der Auswerteeinheit zusätzliche Kundenfahrzeugfunktionen in das Steuerungssystem für das Kraftfahrzeug zum Koordinieren und Ausführen von Kundenfahrzeugfunktionen integriert werden können.

Erfindungsgemäß ist zudem ein Verfahren zum Betreiben des oben beschriebenen Steuerungssystems für ein Kraftfahrzeug zum Koordinieren und Ausführen von Kundenfahrzeugfunktionen vorgesehen. Dieses Verfahren umfasst die folgenden Schritte: Ein Übermitteln von die Fahrzeugfunktionen betreffenden Aktivierungsanforderungen sowie der dazugehörenden Steuerbefehle für ihre jeweiligen Kundenfunktionen von wenigstens einer der Kundenfahrzeugfunktionen, die aktuell inaktiv ist, an die Auswerteeinheit, ein Zuordnen eines vorbestimmten Aktivierungszustands zu der aktuell inaktiven Kundenfahrzeugfunktion, die die Aktivierungsanforderung übermittelt hat, und gegebenenfalls zu einer bereits aktiven Kundenfahrzeugfunktion gemäß der Auswahlroutine, ein Übermitteln der zugeordneten Aktivierungszustände an die entsprechenden Kundenfahrzeugfunktionen und den Fahrzeugregler sowie ein Durchführen der jeweiligen Kundenfunktion durch den Fahrzeugregler gemäß den jeweiligen Steuerbefehlen der entsprechenden Kundenfahrzeugfunktion. Falls bereits eine Kundenfahrzeugfunktion aktiviert ist, bestimmt die Auswerteeinheit, sobald sie die Aktivierungsanforderung einer der aktuell inaktiven Kundenfahrzeugfunktionen empfängt, im Rahmen der Auswahlroutine ein vorbestimmtes Übergangsszenario zwischen den beiden Kundenfahrzeugfunktionen und ordnet entsprechend dem bestimmten Übergangsszenario jeder der beiden Kundenfahrzeugfunktionen einen vorbestimmten Aktivierungszustand zu und übermittelt diesen an diese. Die Auswerteeinheit bestimmt im Rahmen der Auswahlroutine folgendes vorbestimmtes Übergangsszenario zwischen den beiden Kundenfahrzeugfunktionen, um die beiden jeweiligen Kundenfahrzeugfunktionen untereinander zu koordinieren: eine Reservierung der Ansteuerung der Fahrzeugfunktionen durch Steuerbefehle der aktuell inaktiven Kundenfahrzeugfunktion, bis vorbestimmte Aktivierungsbedingungen erfüllt sind.

Erfindungsgemäß ist außerdem ein Kraftfahrzeug mit dem beschriebenen Steuerungssystem möglich, das dazu ausgelegt ist, das oben beschriebene Verfahren zum Betreiben des oben beschriebenen Steuerungssystems des Kraftfahrzeugs zum Koordinieren und Ausführen von Kundenfunktionen durchzuführen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung eines Kraftfahrzeugs mit einem Steuerungssystem zum Koordinieren und Ausführen von Kundenfahrzeugfunktionen; und
- Fig. 2: eine schematische Darstellung einer Auswahlroutine zum Bestimmen von Aktivierungszuständen von Kundenfahrzeugfunktionen.

Bei dem im Folgenden erläuterten Ausführungsbeispiel handelt es sich um eine bevorzugte Ausführungsform der Erfindung.

Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

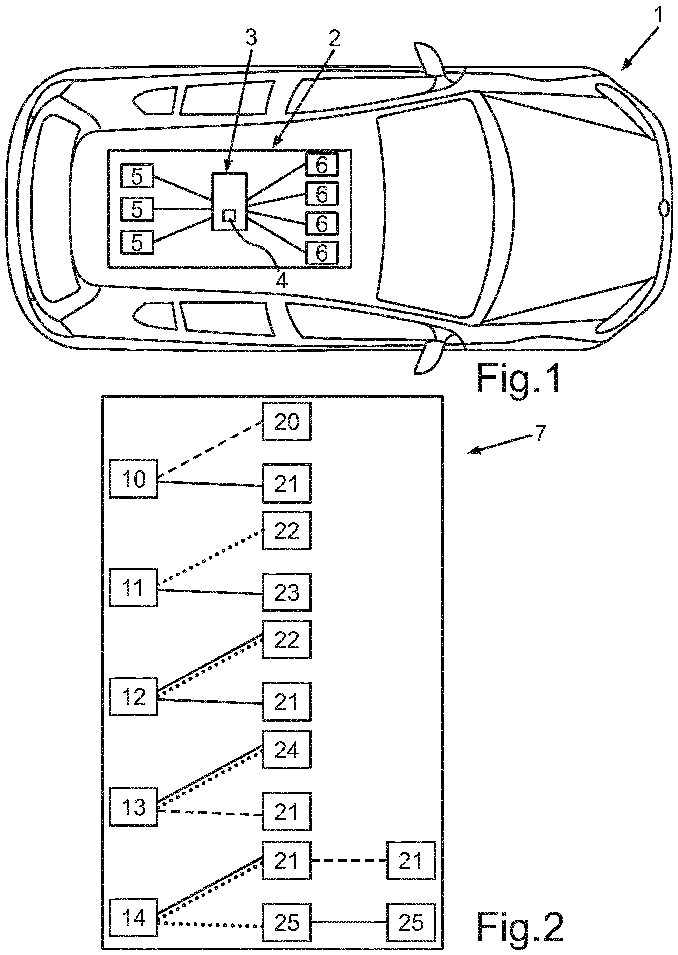

In Fig. 1 ist ein Kraftfahrzeug 1 skizziert, das ein Steuerungssystem 2 zum Koordinieren und Ausführen von Kundenfahrzeugfunktionen 6 umfasst. Das Steuerungssystem 2 umfasst einen Fahrzeugregler 3 mit einer Auswerteeinheit 4 sowie mehrere Fahrzeugfunktionen 5 und Kundenfahrzeugfunktionen 6. Bei der Fahrzeugfunktion 5 handelt es sich beispielsweise um eine Bremse, eine Lenkung oder den Antrieb des Kraftfahrzeugs 1. Bei den Kundenfahrzeugfunktionen 6 handelt es sich beispielsweise um eine automatische Distanzregelung 21 (s. Bezugszeichen 21 in Fig. 2), das heißt ein ACC (Adaptive Cruise Control)-System, einen Parkhilfeassistenten 25 (s. Bezugszeichen 25 in Fig. 2), einen Spurhalteassistenten (s. Bezugszeichen 22 in Fig. 2), eine Geschwindigkeitsregelanlage (s. Bezugszeichen 20 in Fig. 2) oder elektrische Bremsen des Kraftfahrzeugs 1, die manuell von einem Benutzer des Kraftfahrzeugs 1 betätigt werden können, das heißt ein sogenanntes Brake-by-Wire.

Der zentrale Fahrzeugregler 3 ist dazu ausgelegt, die Fahrzeugfunktionen 5 anzusteuern. Die Kundenfahrzeugfunktionen 6 sind wiederum dazu eingerichtet, die Fahrzeugfunktion 5 betreffende Aktivierungsanforderungen sowie dazugehörige Steuerbefehle für ihre jeweilige Kundenfunktion an die Auswerteeinheit 4 des Fahrzeugreglers 3 zu übermitteln. Handelt es sich bei einer Kundenfahrzeugfunktion 6 beispielsweise um den Spurhalteassistenten 22, würde es sich bei der entsprechenden Kundenfunktion um das Halten einer Spur handeln. Falls nun beispielsweise durch das Aktivieren eines entsprechenden Betätigungselements im Fahrzeuginneren durch einen Benutzer des Kraftfahrzeugs 1 der Spurhalteassistent 22 aktiviert wird, sendet dieser eine entsprechende Aktivierungsanforderung sowie die entsprechenden Steuerbefehle, die mit dem Halten der Spur gemäß den Vorgaben des Spurhalteassistenten 22 einhergehen, an die Auswerteeinheit 4. Die Auswerteeinheit 4 bestimmt daraufhin gemäß einer vorbestimmten Auswahlroutine 7 (siehe Bezugszeichen 7 in Fig. 2), ob der Spurhalteassistent 22 aktiviert, nicht aktiviert oder in einem pausierten Zustand betrieben werden soll. Die Auswerteeinheit 4 bestimmt also im Rahmen der Auswahlroutine 7 einen Aktivierungszustand für die bisher inaktive Kundenfahrzeugfunktion 6, das heißt den Spurhalteassistenten 22, die eine Aktivierungsanforderung an die Auswerteeinheit 4 übermittelt hat.

Falls bisher keine Kundenfahrzeugfunktion 6 aktiv ist, kommt es zu einer ungeprüften Aktivierung des Spurhalteassistenten 22. Falls jedoch bereits eine andere Kundenfahrzeugfunktion 6 aktiviert war, wie beispielsweise eine Geschwindigkeitsregelanlage 20, kommt es zu einer Zuordnung von Aktivierungszuständen für beide Kundenfahrzeugfunktionen 6, das heißt den Spurhalteassistenten 22 und die Geschwindigkeitsregelanlage 20, gemäß der vorbestimmten Auswahlroutine 7. Die dabei ermittelten Aktivierungszustände, die prinzipiell zwischen aktiv, inaktiv und pausiert unterscheiden, werden den entsprechenden Kundenfahrzeugfunktionen 6 sowie dem Fahrzeugregler 3 übermittelt. Der Fahrzeugregler 3 ist daraufhin dazu eingerichtet, unter Berücksichtigung der zugeordneten Aktivierungszustände die Fahrzeugfunktionen 5 des Kraftfahrzeugs 1 gemäß den entsprechenden Steuerbefehlen der nun aktivierten beziehungsweise pausierten Kundenfahrzeugfunktion 6 zur Durchführung der jeweiligen Kundenfunktion anzusteuern. Beispielsweise im Fall einer weiteren Aktivierung des Spurhalteassistenten 22 trotz Aktivierungsanforderung einer weiteren Kundenfahrzeugfunktion 6 kommt es zum weiteren Halten der Spur gemäß den Steuerbefehlen des Spurhalteassistenten 22, durchgeführt durch den Fahrzeugregler 3.

In Fig. 2 werden verschiedene Übergangsszenarien skizziert, die im Rahmen der Auswahlroutine 7 die Aktivierungszustände der beteiligten Kundenfahrzeugfunktion 6 bestimmen können. Diese so ermittelten Aktivierungszustände der bereits aktiven Kundenfahrzeugfunktionen 6 sowie aktuell inaktiver Kundenfahrzeugfunktionen 6, die eine Aktivierungsanforderung an die Auswerteeinheit 4 übermittelt haben, werden daraufhin an die entsprechende Kundenfahrzeugfunktion 6 sowie an den Fahrzeugregler 3 übermittelt. Im Rahmen der Auswahlroutine 7 werden insgesamt fünf Übergangsszenarien unterschieden. Die einzelnen Aktivierungszustände, die den einzelnen Kundenfahrzeugfunktionen 6 in Fig. 2 zugeordnet und von diesen ermittelt werden, sind mithilfe von Linien dargestellt, wobei eine durchgezogene Linie den Aktivierungszustand aktiv skizziert, eine gestrichelte Linie den Aktivierungszustand inaktiv und eine gepunktete Linie den Aktivierungszustand pausiert.

Bei einer Übernahme 10 kommt es zu einer Ansteuerung der Fahrzeugfunktion 5 durch Steuerbefehle der bisher inaktiven Kundenfahrzeugfunktion 6, die eine Aktivierungsanforderung an die Auswerteeinheit 4 übermittelt hat. Ist beispielsweise bisher die Geschwindigkeitsregelanlage 20 als Kundenfahrzeugfunktion 6 im Kraftfahrzeug 1 aktiv, kommt es bei einer Aktivierungsanforderung durch eine automatische Distanzregelung 21 zu einer Übernahme der Ansteuerung der Fahrzeugfunktion 5 durch Steuerbefehle der bisher inaktiven automatischen Distanzregelung 21. Der Geschwindigkeitsregelanlage 20 wird also der Aktivierungszustand inaktiv übermittelt, wohingegen der automatischen Distanzregelung 21 der Aktivierungszustand aktiv übermittelt wird und diese Aktivierungszustände werden daraufhin von den entsprechenden Kundenfahrzeugfunktionen 6 realisiert.

Bei einer Übersteuerung 11 kommt es zu einer Ansteuerung der Fahrzeugfunktionen 5 durch Steuerbefehle der aktuell inaktiven Kundenfahrzeugfunktion 6, die eine Aktivierungsanforderung an die Auswerteeinheit 4 ermittelt hat, ohne Inaktivierung der bisher aktiven Kundenfahrzeugfunktion 6. Ist beispielsweise aktuell ein Spurhalteassistent 22 als Kundenfahrzeugfunktion 6 aktiviert, kommt es bei einer Aktivierungsanforderung eines Spurwechselassistenten 23 zu einer derartigen Übersteuerung 11. Daraufhin wird der Spurhalteassistent 22 pausiert, das heißt er läuft in einem On-Hold-Modus weiter, wohingegen der Spurwechselassistent 23 den Aktivierungszustand aktiv zugeordnet bekommt und somit die Steuerung des Kraftfahrzeugs 1 mit seinen Steuerbefehlen vorgeben kann. Sobald der Spurwechsel, den der Spurwechselassistent 23 durchführen möchte, erfolgt ist, wird der Spurwechselassistent 23 inaktiv und der Spurhalteassistent 22 wechselt seinen Zustand von pausiert zurück zu aktiv.

Bei einer Parallelansteuerung 12 als Übergangsszenario kommt es zu einer Ansteuerung der Fahrzeugfunktionen 5 des Kraftfahrzeugs 1 durch Steuerbefehle der aktiven und der aktuell inaktiven Kundenfahrzeugfunktionen 6. Ist beispielsweise zunächst ein Spurhalteassistent 22 aktiv, kommt es bei einer Aktivierungsanforderung einer automatischen Distanzregelung 21 zu einer derartigen Parallelansteuerung 12. Da der Spurhalteassistent 22 lediglich in die Steuerung des Kraftfahrzeugs 1 in Querrichtung eingreift, wohingegen der automatische Distanzregler 21 in die Ansteuerung des Kraftfahrzeugs 1 in Längsrichtung eingreift, können beide Kundenfahrzeugfunktionen 6, das heißt der Spurhalteassistent 22 sowie der automatische Distanzregler 21, beide aktiv sein, ohne dass es zu Widersprüchen in der Ansteuerung des Kraftfahrzeugs 1 durch den Fahrzeugregler 3 kommt. Bei einer Parallelansteuerung 12 ist es zudem möglich, dass die bereits aktive Kundenfahrzeugfunktion 6, das heißt in diesem Beispiel der Spurhalteassistent 22, nach beziehungsweise vor der Aktivierungsanforderung der weiteren Kundenfahrzeugfunktion 6, hier der automatischen Distanzregelung 21, in einem pausierten Zustand war und in diesem Zustand verbleibt.

Bei einer Parallelsteuerung 12 von Kundenfahrzeugfunktionen 6, die auf die gleichen Fahrzeugfunktionen 5 zugreifen, wird mithilfe von vorbestimmten Vorschriften entschieden, wie das Kraftfahrzeug 1 angesteuert wird. Handelt es sich bei der bereits aktiven Kundenfahrzeugfunktion 6 beispielsweise um einen Speedlimiter, der ein Tempolimit vorgibt, und bei der bisher inaktiven Kundenfahrzeugfunktion 6 um eine Geschwindigkeitsregelanlage 20 können diese beiden Kundenfahrzeugfunktionen 6 parallel aktiviert sein. Jedoch ist durch den Speedlimiter eine maximale Geschwindigkeit vorgegeben, deren Überschreiten durch Steuerbefehle der Geschwindigkeitsregelanlage 20 nicht möglich ist. Es ist also in diesem Beispiel eine Vorschrift bezüglich eines Maximalwerts für die Ansteuerung der entsprechenden Fahrzeugfunktion 5 vorgegeben. Handelt es sich bei den beiden parallel aktiven Kundenfahrzeugfunktionen 6 jedoch beispielsweise um einen Notbremsassistenten und eine automatische Distanzregelung 21 kann als Vorschrift anstelle eines vorbestimmten Maximalwerts vorgegeben sein, dass bei einem Bremsbefehl beider Kundenfahrzeugfunktionen 6 stets die stärkere Verzögerung des Kraftfahrzeugs 1 vom Fahrzeugregler 3 durchgeführt wird.

In dem Übergangsszenario Unterbindung 13 kommt es zu einer Ansteuerung der Fahrzeugfunktion 5 der aktuell inaktiven Kundenfahrzeugfunktion 6, die eine Aktivierungsanforderung an die Auswerteeinheit 4 übermittelt hat. Eine solche Unterbindung 13 wird beispielsweise durchgeführt, wenn es sich bei der bisher aktivierten Kundenfahrzeugfunktion 6 um einen Autobahnpiloten 24 handelt, während dessen Aktivierung die Aktivierungsanforderung der automatischen Distanzregelung 21 von der Auswerteeinheit 4 empfangen wird. Der Aktivierungsanforderung der automatischen Distanzregelung 21 wird in dieser Situation nicht stattgegeben, das heißt der automatischen Distanzregelung 21 wird der Aktivierungszustand inaktiv zugeordnet und übermittelt und der Autobahnpilot 24 bleibt in seinem bisher aktiven beziehungsweise pausierten Zustand. Dieses Übergangsszenario erfolgt hier, da der Autobahnpilot 24 auf einer Schnellstraße jegliche anderen Fahrerassistenzsysteme, das heißt andere Kundenfahrzeugfunktionen 6 ersetzt, da er zum vollständig autonomen Fahren auf Schnellstraßen ausgelegt ist, sodass beispielsweise die Kundenfunktionen der automatischen Distanzregelung 21 bereits durch entsprechende Steuerbefehle des Autobahnpiloten 24 durchgeführt werden. In dieser Situation kommt es daher zu einem Aktivierungsverbot der automatischen Distanzregelung 21.

Als weiteres Übergangsszenario ist eine Reservierung 14 in der Auswahlroutine 7 vorgesehen. Bei einer Reservierung 14 kommt es zur Ansteuerung der Fahrzeugfunktionen 5 durch Steuerbefehle der aktuell inaktiven Kundenfahrzeugfunktion 6, die eine Aktivierungsanforderung an die Auswerteeinheit 4 übermittelt hat, bis vorbestimmte Aktivierungsbedingungen erfüllt sind. Fährt ein Kraftfahrzeug 1 beispielsweise mit einer aktivierten oder pausierten automatischen Distanzregelung 21 auf einer Straße, kommt es bei einem Aufrufen eines Parkhilfeassistenten 25, beispielsweise durch eine entsprechende Betätigung eines Bedienelements im Fahrzeuginneren, zunächst zum Übergangsszenario Reservierung 14. Der Parkhilfeassistent 25 wird hierbei so lange in einem pausierten Aktivierungszustand gehalten durch entsprechende übermittelte Signale der Auswerteeinheit 4, bis ein tatsächlicher Parkplatz für das Kraftfahrzeug 1 gesichtet und ausgewählt wurde. Erst dann wechselt der Aktivierungszustand des Parkhilfeassistenten 25 von pausiert zu aktiv, wohingegen die bisher aktive Kundenfahrzeugfunktion 6, die automatische Distanzregelung 21, den Aktivierungszustand inaktiv zugeordnet bekommt.

Anstelle der bisher genannten Fahrerassistenzsysteme als Kundenfahrzeugfunktionen 6 kann bei einem Kraftfahrzeug 1 mit elektrischer Bremse, Lenkung und/oder Beschleunigung auch eine Betätigung eines entsprechenden Bedienelements durch den Benutzer des Kraftfahrzeugs 1 und die damit verbundenen Steuerbefehle als Kundenfahrzeugfunktion 6 angenommen werden. Ist dies der Fall, können zusätzlich zu den in Fig. 2 beschriebenen Übergangsszenarien im Rahmen der Auswahlroutine 7 auch weitere vorgegebene Auswahlkriterien zu berücksichtigen seien. Beispielsweise ist es hierbei möglich, dass vorgegeben wird, dass ein Bremswunsch des Benutzers jegliche andere Steuerbefehle von anderen Kundenfahrzeugfunktionen 6 übersteuert, das heißt es stets zu einer Übernahme 10 durch den manuellen Bremswunsch des Benutzers des Kraftfahrzeugs 1 kommt. Eine solche Übersteuerung 11 durch den Bremswunsch des Benutzers kann jedoch auch nur für bestimmte bereits aktive Kundenfahrzeugfunktionen 6 vorgesehen sein, wohingegen bei anderen Kundenfahrzeugfunktionen 6, wie beispielsweise einer Geschwindigkeitsregelanlage 20, es vorgesehen sein kann, dass bei einer Parallelansteuerung 12 stets der Kundenfahrzeugfunktion 6 mit dem stärkeren Bremssignal stattgegeben wird, sei es das Signal des Bremswunsches des Fahrers oder sei es eine durch entsprechende Steuerbefehle der Geschwindigkeitsregelanlage 20 vorgegebene Bremsbeschleunigung.

Die Auswahlroutine 7 wird zudem in vorbestimmten Zeitabständen und/oder bei jedem übermittelten veränderten Aktivierungszustand einer Kundenfahrzeugfunktion wiederholt durchgeführt, sodass jederzeit aktuelle Aktivierungszustände an die entsprechenden Kundenfahrzeugfunktionen 6 übermittelt werden. Typischerweise findet die Auswahlroutine 7 alle 20 Millisekunden erneut statt.

Falls mehrere Kundenfahrzeugfunktionen 6 jeweilige Aktivierungsanforderungen an die Auswerteeinheit 4 übermitteln, werden diese Aktivierungsanforderungen nacheinander in der Reihe ihres erstmaligen Empfangs einer gültigen Aktivierungsanforderung von der Auswerteeinheit 4 überprüft und mithilfe der Auswahlroutine 7 zur Koordination der Kundenfahrzeugfunktion 6 ausgewertet. Kommt es beispielsweise zu einer Übernahme 10 durch den automatischen Distanzregler 21 über die bisher aktivierte Geschwindigkeitsregelanlage 20, wird im Falle einer nächsten empfangenen Aktivierungsanforderung, beispielsweise durch den Parkhilfeassistenten 25, nicht die Auswahlroutine 7 zwischen der bereits übersteuerten Geschwindigkeitsregelanlage 20 und dem Parkhilfeassistenten 25 durchgeführt. Hier erfolgt lediglich ein Durchführen der Auswahlroutine 7 zwischen dem nun aktiven automatischen Distanzregler 21 und dem Parkhilfeassistenten 25, was zum Übergangsszenario Reservierung 14 führt. Kommt es jedoch zunächst zu einer Aktivierungsanforderung des Spurwechselassistenten 23 bei bereits aktiviertem Spurhalteassistenten 22, erfolgt die Parallelansteuerung 12 beider Kundenfahrzeugfunktionen 6. Bei einer darauffolgenden Aktivierungsanforderung durch den Autobahnpiloten 24 kommt es dann zu einer Durchführung der Auswahlroutine 7 sowohl mit dem Spurhalteassistenten 22 als aktive Kundenfahrzeugfunktion 6 als auch mit dem Spurwechselassistenten 23 als bisher aktive Kundenfahrzeugfunktion 6. In diesem Fall würde es bei beiden Auswahlroutinen zum Übergangsszenario Übernahme 10 durch den Autobahnpiloten 24 kommen, sodass letztendlich der Autobahnpilot 24 als einzige Kundenfahrzeugfunktion 6 im Kraftfahrzeug 1 aktiv ist.

Zusätzlich zu der Aktivierungsanforderung und den dazugehörigen Steuerbefehlen können die einzelnen Kundenfahrzeugfunktionen 6 zusätzlich ihre Aufgabe in Form eines Aufgabenschlüssels an die Auswerteeinheit 4 übermitteln. Ein solcher Aufgabenschlüssel würde im Falle des Parkhilfeassistenten 25 beispielsweise "Einparken" lauten. Diese Aufgabenschlüssel sind der Auswerteeinheit 4 als hinterlegte Informationen bereitgestellt, sodass letztendlich beliebig viele weitere Kundenfahrzeugfunktionen 6 in das Steuerungssystem 2 integriert werden können, da diese entweder bereits durch ihre Aufgabenschlüssel dort hinterlegt sind und somit entsprechende Auswahlkriterien und Informationen zur Auswahlroutine 7 vorliegen, oder durch ein Softwareupdate der Auswerteeinheit 4 die benötigten Informationen zu den weiteren Kundenfahrzeugfunktionen 6 hinzufügbar sind.

Insgesamt zeigen die Beispiele, dass es mit dem Steuerungssystem 2 für ein Kraftfahrzeug 1 möglich ist, mehrere Kundenfahrzeugfunktionen 6 zu koordinieren und nacheinander beziehungsweise parallel auszuführen. Hierbei ist eine Auswerteeinheit 4 des Fahrzeugreglers 3 des Kraftfahrzeugs 1 dazu eingerichtet, bei einer Aktivierungsanforderung einer Kundenfahrzeugfunktion 6 gemäß einer vorbestimmten Auswahlroutine 7 zu bestimmen, inwiefern diese Kundenfahrzeugfunktion 6 aktiv, inaktiv oder pausiert werden soll. Diese so ermittelten Aktivierungszustände werden sowohl den Kundenfahrzeugfunktionen 6 als auch dem Fahrzeugregler 3 übermittelt, sodass dieser letztendlich unter Berücksichtigung dieser zugeordneten Aktivierungszustände verschiedene Fahrzeugfunktionen 5 des Kraftfahrzeugs 1 gemäß den entsprechenden Steuerbefehlen der einzelnen aktiven Kundenfahrzeugfunktionen 6 zur Durchführung deren Kundenfunktionen ansteuern kann.

### Bezugszeichenliste

- 1: Kraftfahrzeug
- 2: Steuerungssystem
- 3: Fahrzeugregler
- 4: Auswerteeinheit
- 5: Fahrzeugfunktion
- 6: Kundenfahrzeugfunktion
- 7: Auswahlroutine
- 10: Übernahme
- 11: Übersteuerung
- 12: Parallelansteuerung
- 13: Unterbindung
- 14: Verzögerung
- 20: Geschwindigkeitsregelanlage
- 21: automatische Distanzregelung
- 22: Spurhalteassistent
- 23: Spurwechselassistent
- 24: Autobahnpilot
- 25: Parkhilfeassistent

## Patentansprüche

1. Steuerungssystem (2) für ein Kraftfahrzeug (1) zum Koordinieren und Ausführen von Kundenfahrzeugfunktionen (6), umfassend
- einen zentralen Fahrzeugregler (3) zum Ansteuern von Fahrzeugfunktionen (5),
- mehrere Kundenfahrzeugfunktionen (6), die dazu eingerichtet sind, die Fahrzeugfunktionen (5) betreffende Aktivierungsanforderungen sowie dazugehörige Steuerbefehle für ihre jeweiligen Kundenfunktionen an eine Auswerteeinheit (4) des Fahrzeugreglers (3) zu übermitteln,
- wobei die Auswerteeinheit (4) des Fahrzeugreglers (3) dazu eingerichtet ist, wenn eine aktuell inaktive Kundenfahrzeugfunktion (6) eine Aktivierungsanforderung übermittelt, gemäß einer vorbestimmten Auswahlroutine (7) zu bestimmen, welcher vorbestimmte Aktivierungszustand der aktuell inaktiven Kundenfahrzeugfunktion (6) sowie gegebenenfalls einer bereits aktiven Kundenfahrzeugfunktion (6) zugeordnet wird, und die zugeordneten Aktivierungszustände an die entsprechenden Kundenfahrzeugfunktionen (6) und den Fahrzeugregler (3) zu übermitteln, der dazu eingerichtet ist, unter Berücksichtigung der zugeordneten Aktivierungszustände die Fahrzeugfunktionen (5) des Kraftfahrzeugs (1) gemäß den jeweiligen Steuerbefehlen der entsprechenden Kundenfahrzeugfunktionen (6) zur Durchführung der jeweiligen Kundenfunktion (5) anzusteuern,
- wobei, falls bereits eine Kundenfahrzeugfunktion (6) aktiviert ist, die Auswerteeinheit (4) dazu eingerichtet ist, sobald sie die Aktivierungsanforderung einer der aktuell inaktiven Kundenfahrzeugfunktionen (6) empfängt, im Rahmen der Auswahlroutine (7) ein vorbestimmtes Übergangsszenario zwischen den beiden Kundenfahrzeugfunktionen (6) zu bestimmen und entsprechend dem bestimmten Übergangsszenario jeder der beiden Kundenfahrzeugfunktionen (6) einen vorbestimmten Aktivierungszustand zuzuordnen und an diese zu übermitteln,
**dadurch gekennzeichnet, dass**
die Auswerteeinheit (4) dazu eingerichtet ist, im Rahmen der Auswahlroutine (7) folgendes vorbestimmtes Übergangsszenario zwischen den beiden Kundenfahrzeugfunktionen (6) zu bestimmen, um die beiden jeweiligen Kundenfahrzeugfunktionen (6) untereinander zu koordinieren:
eine Reservierung (14) der Ansteuerung der Fahrzeugfunktionen (5) durch Steuerbefehle der aktuell inaktiven Kundenfahrzeugfunktion (6), bis vorbestimmte Aktivierungsbedingungen erfüllt sind.

2. Steuerungssystem (2) nach Anspruch 1,
**dadurch gekennzeichnet, dass**
der Fahrzeugregler (3) dazu eingerichtet ist, durch das Ansteuern der Fahrzeugfunktionen (5) das Kraftfahrzeug (1) zu lenken, zu bremsen und/oder zu beschleunigen.

3. Steuerungssystem (2) nach einem der vorhergehenden Ansprüche,
**dadurch gekennzeichnet, dass**
die Kundenfahrzeugfunktionen (6) Fahrerassistenzsysteme des Kraftfahrzeugs (1) umfassen.

4. Steuerungssystem (2) nach einem der vorhergehenden Ansprüche,
**dadurch gekennzeichnet, dass**
die Auswerteeinheit (4) dazu eingerichtet ist, zumindest zwischen den Aktivierungszuständen aktiv, inaktiv und pausiert einer Kundenfahrzeugfunktion (6) zu unterscheiden.

5. Steuerungssystem (2) nach einem der vorhergehenden Ansprüche,
**dadurch gekennzeichnet, dass**
falls keine Kundenfahrzeugfunktion (6) aktiviert ist, die Auswerteeinheit (4) dazu eingerichtet ist, der aktuell inaktiven Kundenfahrzeugfunktion (6), die als erstes die Aktivierungsanforderung übermittelt, mit dem an diese Kundenfahrzeugfunktion (6) übermittelten Aktivierungszustand eine Erlaubnis zur Aktivierung zu erteilen.

6. Steuerungssystem (2) nach einem der vorhergehenden Ansprüche,
**dadurch gekennzeichnet, dass**
die Auswerteeinheit (4) dazu eingerichtet ist, im Rahmen der Auswahlroutine (7) eines der weiteren folgenden vorbestimmten Übergangsszenarien zwischen den beiden Kundenfahrzeugfunktionen (6) zu bestimmen, um die beiden jeweiligen Kundenfahrzeugfunktionen (6) untereinander zu koordinieren:
- eine Übernahme (10) der Ansteuerung der Fahrzeugfunktionen (5) durch Steuerbefehle der aktuell inaktiven Kundenfahrzeugfunktion (6),
- eine Übersteuerung (11) der Ansteuerung der Fahrzeugfunktionen (5) durch Steuerbefehle der aktuell inaktiven Kundenfahrzeugfunktion (6) ohne Inaktivierung der aktiven Kundenfahrzeugfunktion (6),
- eine Parallelansteuerung (12) der Fahrzeugfunktionen (5) durch Steuerbefehle der aktiven und der aktuell inaktiven Kundenfahrzeugfunktionen (6),
- eine Unterbindung (13) der Ansteuerung der Fahrzeugfunktionen (5) durch Steuerbefehle der aktuell inaktiven Kundenfahrzeugfunktion (6).

7. Steuerungssystem (2) nach einem der vorhergehenden Ansprüche,
**dadurch gekennzeichnet, dass**
die Auswerteeinheit (4) dazu ausgelegt ist, in vorbestimmten Zeitabständen die Auswahlroutine (7) durchzuführen und jeweils die dabei bestimmten aktuellen Aktivierungszustände an die entsprechenden Kundenfahrzeugfunktionen (6) zu übermitteln.

8. Steuerungssystem (2) nach einem der vorhergehenden Ansprüche,
**dadurch gekennzeichnet, dass**
falls mehre Kundenfahrzeugfunktionen (6) innerhalb eines gemeinsamen Zeitintervalls Aktivierungsanforderungen an die Auswerteeinheit (4) übermitteln, diese dazu ausgelegt ist, die Auswahlroutine (7) für jede der Aktivierungsanforderungen einzeln und in der Reihenfolge, in der die gültigen Aktivierungsanforderungen von der Auswerteeinheit (4) erstmalig empfangen wurden, durchzuführen.

9. Steuerungssystem (2) nach einem der vorhergehenden Ansprüche,
**dadurch gekennzeichnet, dass**
die Kundenfahrzeugfunktionen (6) Betätigungen zumindest eines Bedienelements des Kraftfahrzeugs (1) durch einen Benutzer des Kraftfahrzeugs (1) zum manuellen Ansteuern einer fahrzeugseitigen Ausführungseinheit, die signaltechnisch mit dem Bedienelement gekoppelt und mechanisch vom Bedienelement entkoppelt ist, umfassen.

10. Steuerungssystem (2) nach Anspruch 9,
**dadurch gekennzeichnet, dass**
falls die Betätigung des Benutzers des Kraftfahrzeugs (1) als entsprechende Aktivierungsanforderung an die Auswerteeinheit (4) übermittelt wird, die Auswerteeinheit (4) dazu eingerichtet ist, im Rahmen der Auswahlroutine (7) weitere vorgegebene Auswahlkriterien zu berücksichtigen.

11. Steuerungssystem (2) nach einem der vorhergehenden Ansprüche,
**dadurch gekennzeichnet, dass**
die Kundenfahrzeugfunktionen (6) dazu ausgelegt sind, zusätzlich zu den jeweiligen Aktivierungsanforderungen und den dazugehörigen Steuerbefehlen einen die jeweilige Kundenfunktion beschreibenden Aufgabenschlüssel an die Auswerteeinheit (4) zu übermitteln, wobei der Fahrzeugregler (3) dazu eingerichtet ist, vorbestimmte Aufgaben anzubieten, deren Aufgabenschlüssel in der Auswerteeinheit (4) hinterlegt sind, und in das Steuerungssystem (2) zusätzliche Kundenfahrzeugfunktionen (6) integrierbar sind, falls die jeweiligen Kundenfunktionen dieser Kundenfahrzeugfunktionen (6) mit den der Auswerteeinheit (4) bekannten Aufgabenschlüsseln beschreibbar sind.

12. Verfahren zum Betreiben eines Steuerungssystems (2) eines Kraftfahrzeugs (1) nach einem der vorhergehenden Ansprüche zum Koordinieren und Ausführen von Kundenfahrzeugfunktionen (6), umfassend die Schritte:
- Übermitteln von die Fahrzeugfunktionen (5) betreffende Aktivierungsanforderungen sowie dazugehörige Steuerbefehle für ihre jeweiligen Kundenfunktionen von wenigstens einer der Kundenfahrzeugfunktionen (6), die aktuell inaktiv ist, an die Auswerteeinheit (4),
- Zuordnen eines vorbestimmten Aktivierungszustand zu der aktuell inaktiven Kundenfahrzeugfunktion (6), die die Aktivierungsanforderung übermittelt hat, und gegebenenfalls zu einer bereits aktiven Kundenfahrzeugfunktion (6) gemäß der Auswahlroutine (7),
- Übermitteln der zugeordneten Aktivierungszustände an die entsprechenden Kundenfahrzeugfunktionen (6) und den Fahrzeugregler (3),
- Durchführung der jeweiligen Kundenfunktion durch den Fahrzeugregler (3) gemäß den jeweiligen Steuerbefehlen der entsprechenden Kundenfahrzeugfunktionen (6).
- wobei, falls bereits eine Kundenfahrzeugfunktion (6) aktiviert ist, die Auswerteeinheit (4), sobald sie die Aktivierungsanforderung einer der aktuell inaktiven Kundenfahrzeugfunktionen (6) empfängt, im Rahmen der Auswahlroutine (7) ein vorbestimmtes Übergangsszenario zwischen den beiden Kundenfahrzeugfunktionen (6) bestimmt und entsprechend dem bestimmten Übergangsszenario jeder der beiden Kundenfahrzeugfunktionen (6) einen vorbestimmten Aktivierungszustand zuordnet und an diese übermittelt,
**dadurch gekennzeichnet, dass**
die Auswerteeinheit (4) im Rahmen der Auswahlroutine (7) folgendes vorbestimmtes Übergangsszenario zwischen den beiden Kundenfahrzeugfunktionen (6) bestimmt, um die beiden jeweiligen Kundenfahrzeugfunktionen (6) untereinander zu koordinieren:
eine Reservierung (14) der Ansteuerung der Fahrzeugfunktionen (5) durch Steuerbefehle der aktuell inaktiven Kundenfahrzeugfunktion (6), bis vorbestimmte Aktivierungsbedingungen erfüllt sind.

13. Kraftfahrzeug (1) mit einem Steuerungssystem (2) nach einem der Ansprüche 1 bis 11.

## Claims

1. Control system (2) for a motor vehicle (1) for coordinating and executing customer vehicle functions (6), comprising
- a central vehicle regulator (3) for actuating vehicle functions (5),
- a plurality of customer vehicle functions (6) that are configured to transmit activation requests relating to the vehicle functions (5) and associated control commands for the respective customer functions thereof to an evaluation unit (4) of the vehicle regulator (3),
- wherein the evaluation unit (4) of the vehicle regulator (3) is configured to determine, if a currently inactive customer vehicle function (6) transmits an activation request, in accordance with a predetermined selection routine (7), which predetermined activation state is assigned to the currently inactive customer vehicle function (6) and possibly to an already active customer vehicle function (6), and to transmit the assigned activation states to the corresponding customer vehicle functions (6) and the vehicle regulator (3) that is configured to actuate, taking the assigned activation states into consideration, the vehicle functions (5) of the motor vehicle (1) to carry out the respective customer function (5) in accordance with the respective control commands of the corresponding customer vehicle functions (6),
- wherein, if a customer vehicle function (6) has already been activated, the evaluation unit (4) is configured, as soon as it receives the activation request from one of the currently inactive customer vehicle functions (6), to determine a predetermined transition scenario between the two customer vehicle functions (6) as part of the selection routine (7) and, in accordance with the determined transition scenario, to assign a predetermined activation state to each of the two customer vehicle functions (6) and to transmit same thereto,
**characterized in that**
the evaluation unit (4) is configured to determine the following predetermined transition scenario between the two customer vehicle functions (6) as part of the selection routine (7) in order to coordinate the two respective customer vehicle functions (6) with one another:
reserving (14) the actuation of the vehicle functions (5) by way of control commands of the currently inactive customer vehicle function (6) until predetermined activation conditions have been met.

2. Control system (2) according to Claim 1,
**characterized in that**
the vehicle regulator (3) is configured to steer, brake and/or accelerate the motor vehicle (1) by actuating the vehicle functions (5).

3. Control system (2) according to either of the preceding claims,
**characterized in that**
the customer vehicle functions (6) comprise driver assistance systems of the motor vehicle (1).

4. Control system (2) according to one of the preceding claims,
**characterized in that**
the evaluation unit (4) is configured to differentiate at least between the activation states of active, inactive and paused of a customer vehicle function (6).

5. Control system (2) according to one of the preceding claims,
**characterized in that**,
if no customer vehicle function (6) has been activated, the evaluation unit (4) is configured to grant activation permission to the currently inactive customer vehicle function (6) that transmits the activation request first with the activation state transmitted to this customer vehicle function (6).

6. Control system (2) according to one of the preceding claims,
**characterized in that**
the evaluation unit (4) is configured to determine one of the further following predetermined transition scenarios between the two customer vehicle functions (6) as part of the selection routine (7) in order to coordinate the two respective customer vehicle functions (6) with one another:
- undertaking (10) the actuation of the vehicle functions (5) by way of control commands of the currently inactive customer vehicle function (6),
- overriding (11) the actuation of the vehicle functions (5) by way of control commands of the currently inactive customer vehicle function (6) without deactivating the active customer vehicle function (6),
- actuating (12) the vehicle functions (5) in parallel by way of control commands of the active and the currently inactive customer vehicle functions (6),
- preventing (13) the actuation of the vehicle functions (5) by way of control commands of the currently inactive customer vehicle function (6).

7. Control system (2) according to one of the preceding claims,
**characterized in that**
the evaluation unit (4) is configured to carry out the selection routine (7) at predetermined time intervals and in each case to transmit the current activation states determined in the process to the corresponding customer vehicle functions (6).

8. Control system (2) according to one of the preceding claims,
**characterized in that**,
if a plurality of customer vehicle functions (6) transmit activation requests to the evaluation unit (4) within the same time interval, said evaluation unit is configured to carry out the selection routine (7) for each of the activation requests separately and in the order in which the valid activation requests were first received by the evaluation unit (4).

9. Control system (2) according to one of the preceding claims,
**characterized in that**
the customer vehicle functions (6) comprise activation of at least one operator control element of the motor vehicle (1) by a user of the motor vehicle (1) for manually actuating a vehicle-side execution unit, which is coupled to the operator control element using signal technology and is mechanically decoupled from the operator control element.

10. Control system (2) according to Claim 9,
**characterized in that**,
if the actuation of the user of the motor vehicle (1) is transmitted as a corresponding activation request to the evaluation unit (4), the evaluation unit (4) is configured to take further predetermined selection criteria into consideration as part of the selection routine (7).

11. Control system (2) according to one of the preceding claims,
**characterized in that**
the customer vehicle functions (6) are designed to transmit, in addition to the respective activation requests and the associated control commands, a task key, which describes the respective customer function, to the evaluation unit (4), wherein the vehicle regulator (3) is configured to provide predetermined tasks, the task keys of which are stored in the evaluation unit (4), and additional customer vehicle functions (6) can be integrated into the control system (2) if the respective customer functions of these customer vehicle functions (6) can be described by the task keys known to the evaluation unit (4).

12. Method for operating a control system (2) of a motor vehicle (1) according to one of the preceding claims for coordinating and executing customer vehicle functions (6), comprising the steps of:
- transmitting activation requests relating to the vehicle functions (5) and associated control commands for the respective customer functions thereof from at least one of the customer vehicle functions (6) that is currently inactive, to the evaluation unit (4),
- assigning a predetermined activation state to the currently inactive customer vehicle function (6) that has transmitted the activation request, and possibly to an already active customer vehicle function (6) in accordance with the selection routine (7),
- transmitting the assigned activation states to the corresponding customer vehicle functions (6) and the vehicle regulator (3),
- the vehicle regulator (3) carrying out the respective customer function in accordance with the respective control commands of the corresponding customer vehicle functions (6),
- wherein, if a customer vehicle function (6) has already been activated, the evaluation unit (4), as soon as it receives the activation request from one of the currently inactive customer vehicle functions (6), determines a predetermined transition scenario between the two customer vehicle functions (6) as part of the selection routine (7) and, in accordance with the determined transition scenario, assigns a predetermined activation state to each of the two customer vehicle functions (6) and transmits same thereto,
**characterized in that**
the evaluation unit (4) determines the following predetermined transition scenario between the two customer vehicle functions (6) as part of the selection routine (7) in order to coordinate the two respective customer vehicle functions (6) with one another:
reserving (14) the actuation of the vehicle functions (5) by way of control commands of the currently inactive customer vehicle function (6) until predetermined activation conditions have been met.

13. Motor vehicle (1) having a control system (2) according to one of Claims 1 to 11.

## Revendications

1. Système de commande (2) pour un véhicule automobile (1) destiné à coordonner et à exécuter des fonctions client de véhicule (6), comprenant
- un régulateur de véhicule central (3) destiné à commander des fonctions de véhicule (5),
- plusieurs fonctions client de véhicule (6), qui sont conçues pour communiquer des demandes d'activation concernant les fonctions de véhicule (5) ainsi que des instructions de commande associées pour leurs fonctions client respectives à une unité d'interprétation (4) du régulateur de véhicule (3),
- l'unité d'interprétation (4) du régulateur de véhicule (3) étant conçue pour, lorsqu'une fonction client de véhicule (6) communique une demande d'activation, déterminer conformément à une routine de sélection (7) prédéterminée quel état d'activation prédéterminé est attribué à la fonction client de véhicule (6) actuellement inactive ainsi que, le cas échéant, à une fonction client de véhicule (6) déjà active, et communiquer les états d'activation attribués aux fonctions client de véhicule (6) correspondantes et au régulateur de véhicule (3), lequel est conçu pour, en tenant compte des états d'activation attribués, commander les fonctions de véhicule (5) du véhicule automobile (1) conformément aux instructions de commande respectives des fonctions client de véhicule (6) correspondantes en vue d'exécuter la fonction client (5) respective,
- l'unité d'interprétation (4) étant conçue pour, dans le cas où une fonction client de véhicule (6) est déjà activée, dès qu'elle reçoit la demande d'activation de l'une des fonctions client de véhicule (6) actuellement inactives, déterminer un scénario de transition prédéterminé entre les deux fonctions client de véhicule (6) dans le cadre de la routine de sélection (7) et attribuer un état d'activation prédéterminé à chacune des deux fonctions client de véhicule (6) conformément au scénario de transition déterminé et le communiquer à celle-ci,
**caractérisé en ce que**
l'unité d'interprétation (4) est conçue pour, dans le cadre de la routine de sélection (7), déterminer le scénario de transition prédéterminé suivant entre les deux fonctions client de véhicule (6) afin de coordonner les deux fonctions client de véhicule (6) respectives entre elles :
une réservation (14) de la commande des fonctions de véhicule (5) par des instructions de commande de la fonction client de véhicule (6) actuellement inactive jusqu'à ce que des conditions d'activation prédéterminées soient remplies.

2. Système de commande (2) selon la revendication 1, **caractérisé en ce que** le régulateur de véhicule (3) est conçu pour diriger, freiner et/ou accélérer le véhicule (1) par la commande des fonctions de véhicule (5).

3. Système de commande (2) selon l'une des revendications précédentes, **caractérisé en ce que** les fonctions client de véhicule (6) comprennent des systèmes d'assistance au conducteur du véhicule (1).

4. Système de commande (2) selon l'une des revendications précédentes, **caractérisé en ce que** l'unité d'interprétation (4) est conçue pour faire la différence entre au moins deux des états d'activation active, inactive et en pause d'une fonction client de véhicule (6) .

5. Système de commande (2) selon l'une des revendications précédentes, **caractérisé en ce que** dans le cas où une fonction client de véhicule (6) est activée, l'unité d'interprétation (4) est conçue pour octroyer, à la fonction client de véhicule (6) actuellement inactive qui communique en premier la demande d'activation, une autorisation d'activation avec l'état d'activation communiqué à cette fonction client de véhicule (6).

6. Système de commande (2) selon l'une des revendications précédentes, **caractérisé en ce que** l'unité d'interprétation (4) est conçue pour, dans le cadre de la routine de sélection (7), déterminer l'un des scénarios de transition prédéterminés suivants entre les deux fonctions client de véhicule (6) afin de coordonner entre elles les deux fonctions client de véhicule (6) respectives :
- une prise en charge (10) de la commande de la fonction de véhicule (5) par les instructions de commande de la fonction client de véhicule (6) actuellement inactive,
- une commande prioritaire (11) de la commande de la fonction de véhicule (5) par les instructions de commande de la fonction client de véhicule (6) actuellement inactive sans désactivation de la fonction client de véhicule (6) actuellement active,
- une commande en parallèle (12) des fonctions de véhicule (5) par les instructions de commande des fonctions client de véhicule (6) actives et actuellement inactives,
- une inhibition (13) de la commande des fonctions de véhicule (5) par les instructions de commande de la fonction client de véhicule (6) actuellement inactive.

7. Système de commande (2) selon l'une des revendications précédentes, **caractérisé en ce que** l'unité d'interprétation (4) est conçue pour exécuter la routine de sélection (7) à des intervalles de temps prédéterminés et communiquer respectivement les états d'activation actuels ainsi déterminés aux fonctions client de véhicule (6) correspondantes.

8. Système de commande (2) selon l'une des revendications précédentes, **caractérisé en ce que** dans le cas où plusieurs fonctions client de véhicule (6) communiquent des demandes d'activation à l'unité d'interprétation (4) au sein d'un intervalle de temps commun, celle-ci est conçue pour exécuter la routine de sélection (7) individuellement pour chacune des demandes d'activation et dans l'ordre dans lequel les demandes d'activation valides ont été reçues pour la première fois par l'unité d'interprétation (4).

9. Système de commande (2) selon l'une des revendications précédentes, **caractérisé en ce que** les fonctions client de véhicule (6) comprennent des actionnements d'au moins un élément de commande du véhicule automobile (1) par un utilisateur du véhicule automobile (1) en vue de commander manuellement une unité d'exécution côté véhicule, laquelle est couplée signalétiquement à l'élément de commande et découplée mécaniquement de l'élément de commande.

10. Système de commande (2) selon la revendication 9, **caractérisé en ce que** dans le cas où l'actionnement de l'utilisateur du véhicule automobile (1) est communiqué à l'unité d'interprétation (4) en tant que demande d'activation correspondante, l'unité d'interprétation (4) est configurée pour tenir compte de critères de sélection prédéfinis supplémentaires dans le cadre de la routine de sélection (7).

11. Système de commande (2) selon l'une des revendications précédentes, **caractérisé en ce que** les fonctions client de véhicule (6) sont conçues pour, en plus des demandes d'activation respectives et des instructions de commande associées, communiquer à l'unité d'interprétation (4) une clé de tâche décrivant la fonction client respective, le régulateur de véhicule (3) étant configuré pour proposer des tâches prédéterminées dont la clé de tâche sont stockées dans l'unité d'interprétation (4), et des fonctions client de véhicule (6) supplémentaires pouvant être intégrées dans le système de commande (2) dans le cas om les fonctions client respectives de ces fonctions client de véhicule (6) peuvent être décrites avec les clés de tâche connues par l'unité d'interprétation (4).

12. Procédé pour faire fonctionner un système de commande (2) pour un véhicule automobile (1) selon l'une des revendications précédentes en vue de coordonner et d'exécuter des fonctions client de véhicule (6), comprenant les étapes suivantes :
- communication de demandes d'activation concernant les fonctions de véhicule (5) ainsi que d'instructions de commande associées pour leurs fonctions client respectives d'au moins l'une des fonctions client de véhicule (6), qui est actuellement inactive, à l'unité d'interprétation (4),
- attribution d'un état d'activation prédéterminé à la fonction client de véhicule (6) actuellement inactive, qui a communiqué la demande d'activation, et, le cas échéant, à une fonction client de véhicule (6) déjà active conformément à une routine de sélection (7),
- communication des états d'activation attribués aux fonctions client de véhicule (6) correspondantes et au régulateur de véhicule (3),
- exécution de la fonction client respective par le régulateur de véhicule (3) conformément aux instructions de commande respectives des fonctions client de véhicule (6) correspondantes,
- l'unité d'interprétation (4), dans le cas où une fonction client de véhicule (6) est déjà activée, dès qu'elle reçoit la demande d'activation de l'une des fonctions client de véhicule (6) actuellement inactives, déterminant un scénario de transition prédéterminé entre les deux fonctions client de véhicule (6) dans le cadre de la routine de sélection (7) et attribuant un état d'activation prédéterminé à chacune des deux fonctions client de véhicule (6) conformément au scénario de transition déterminé et le communiquant à celle-ci,
**caractérisé en ce que**
l'unité d'interprétation (4), dans le cadre de la routine de sélection (7), détermine le scénario de transition prédéterminé suivant entre les deux fonctions client de véhicule (6) afin de coordonner les deux fonctions client de véhicule (6) respectives entre elles :
une réservation (14) de la commande des fonctions de véhicule (5) par des instructions de commande de la fonction client de véhicule (6) actuellement inactive jusqu'à ce que des conditions d'activation prédéterminées soient remplies.

13. Véhicule automobile (1) comprenant un système de commande (2) selon l'une des revendications 1 à 11.
